(19) Europäisches Patentamt
European Patent Office
Office européen des brevets

(11) EP 3 680 795 B1

(12) EUROPEAN PATENT SPECIFICATION

(45) Date of publication and mention of the grant of the patent:
**04.05.2022 Bulletin 2022/18**

(21) Application number: **19214400.4**

(22) Date of filing: **09.12.2019**

(51) International Patent Classification (IPC):
**G06F 21/33** (2013.01)

(52) Cooperative Patent Classification (CPC):
**G06F 21/335; H04L 63/0807**

(54) **SIGNATURE SERVER, SIGNATURE METHOD, AND SIGNATURE PROGRAM**

SIGNATURSERVER, SIGNATURVERFAHREN UND SIGNATURPROGRAMM

SERVEUR DE SIGNATURE, PROCÉDÉ DE SIGNATURE ET PROGRAMME DE SIGNATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2019 JP 2019003858**

(43) Date of publication of application:
**15.07.2020 Bulletin 2020/29**

(73) Proprietor: **FUJITSU LIMITED**
**Kanagawa 211-8588 (JP)**

(72) Inventors:
• **Takeuchi, Takuma**
**Kanagawa 211-8588 (JP)**
• **Higashikado, Yoshiki**
**Kanagawa 211-8588 (JP)**
• **Fujimoto, Shingo**
**Kanagawa 211-8588 (JP)**
• **Kamakura, Ken**
**Kanagawa 211-8588 (JP)**

(74) Representative: **Hoffmann Eitle**
**Patent- und Rechtsanwälte PartmbB**
**Arabellastraße 30**
**81925 München (DE)**

(56) References cited:
**US-A1- 2018 191 685**

• **Anonymous: "Coinbase Connect (Oauth2)", , 27 February 2017 (2017-02-27), XP055688672, Retrieved from the Internet: URL:https://web.archive.org/web/2017022622 1023/https://developers.coinbase.com/docs/ wallet/coinbase-connect/ [retrieved on 2020-04-23]**
• **Kawasaki Takahiko: "Diagrams And Movies Of All The OAuth 2.0 Flows", , 26 March 2017 (2017-03-26), XP055688712, Retrieved from the Internet: URL:https://medium.com/@darutk/diagrams-an d-movies-of-all-the-oauth-2-0-flows-194f3c 3ade85 [retrieved on 2020-04-23]**
• **Anonymous: "Transaction - Bitcoin Wiki", , 1 March 2015 (2015-03-01), XP055246094, Retrieved from the Internet: URL:https://en.bitcoin.it/w/index.php?titl e=Transaction&oldid=54777 [retrieved on 2016-01-29]**

## Description

FIELD

The embodiments discussed herein are related to a signature server, a signature method, and a signature program capable of performing a process for digital signature issue.

BACKGROUND

A blockchain is used as a management system for a virtual currency, and requires a safe operation. Types of the virtual currency or the blockchain are explosively increased, and linking between different virtual currencies and blockchains is increasingly required. When linking different virtual currencies and blockchains, different authentication information is required for transaction execution. It is difficult for a general user of this service to keep such authentication information himself or herself, and issue a digital signature and execute a transaction. Therefore, a web application which manages authentication information, issues a digital signature and executes the transaction on behalf of the user with permission is required.

In the related art, as a technology related to management of a blockchain and a virtual currency, there is a technology for executing an account operation interlocked with transaction using the blockchain and determining success or failure of the transaction by matching execution results (for example, see Japanese Laid-open Patent Publication No. 2018-139067). There is a technology in which an encryption wallet accessible to a node in which a distributed blockchain ledger is managed by a virtual data token is provided to a user and a security is transferred between users (for example, see Japanese National Publication of International Patent Application No. 2018-521437). There is a technology in which a virtual currency management device transmits an exchange request including an exchange rate between a virtual currency and a legal currency to a server in which a blockchain is stored so as to add a block to the blockchain, and receive an exchange rate after an exchange between the virtual currency and the legal currency (for example, see Japanese Laid-open Patent Publication No. 2018-136657).

Document XP055688672 describes Coinbase Connect (Oauth2) which involves using the OAuth 2.0 protocol for allowing Coinbase users to grant a 3d party application full or partial access to the user's Coinbase account, the access including sending cryptocurrency from the user's hosted wallet up to a send limit approved by the user.

Regarding the requirement of the web application, when authentication information is managed in a server of the web application accessed by many users, there is a risk that the authentication information will be leaked to the outside. For this reason, an operation mode in which a signature server which performs a process according to digital signature issue is separately prepared and the signature server permits only access of the web application is considered. At this time, the signature server is permitted to issue a signature only for a specific transaction content by a request from a user via the web application, and issues a digital signature when receiving a request for a transaction permitted in advance from the web application. The web application issues a transaction in the blockchain using the digital signature received from the signature server.

When performing the operation, for example, in an exchange of the virtual currency, a currency exchange rate fluctuates in a short time, so there may be a situation in which the transaction amount differs between when the user permits the transaction signature and when the user actually performs a remittance. In this case, in the related art, it is impossible to collate the permission content intended by the user with the actual transaction content.

In one aspect, an object of the present embodiment is to collate permission contents with transaction contents of a user.

SUMMARY

According to an aspect of the embodiments, a signature server includes: a processing unit that, in response to reception of a token issue request including transaction information from a user, generates a permission rule for determining a permission range of transaction contents based on the transaction information and transmits a token corresponding to the permission rule to a web application which processes a proxy transaction for the user, and in response to reception of a signature issue request based on a transaction request by the user including the token from the web application, determines whether or not to issue a digital signature corresponding to the signature issue request, based on whether or not the transaction contents included in the transaction request are within the permission range determined by the permission rule corresponding to the token included in the signature issue request.

BRIEF DESCRIPTION OF DRAWINGS

FIG. 1 is a block diagram of a function of a signature server related to a transaction process according to Embodiment 1;
FIG. 2 is a diagram illustrating an example of the transaction process according to Embodiment 1;
FIG. 3 is a diagram illustrating an example of a hardware configuration of the signature server according to Embodiment 1;
FIG. 4A is a flowchart illustrating an example (Part 1) of the transaction process according to Embodiment 1;

FIG. 4B is a flowchart illustrating the example (Part 2) of the transaction process according to Embodiment 1;

FIG. 5 is a chart illustrating an example of transaction information when a signature is permitted according to Embodiment 1;

FIG. 6 is a chart illustrating an example of a permission rule generated by the signature server according to Embodiment 1;

FIG. 7 is a chart illustrating an example of a table of the permission rule held by the signature server according to Embodiment 1;

FIG. 8 is a chart illustrating an example of a remittance request according to Embodiment 1;

FIG. 9 is a chart illustrating an example of a remittance request sent from a web application to the signature server according to Embodiment 1;

FIG. 10 is a chart illustrating an example of a permission rule extracted by the signature server according to Embodiment 1;

FIG. 11 is a diagram illustrating an example of a transaction process according to Embodiment 2;

FIG. 12A is a flowchart illustrating an example (Part 1) of the transaction process according to Embodiment 2;

FIG. 12B is a flowchart illustrating the example (Part 2) of the transaction process according to Embodiment 2;

FIG. 13 is a chart illustrating an example of transaction information when a signature is permitted according to Embodiment 2;

FIG. 14 is a chart illustrating an example of a permission rule generated by a signature server according to Embodiment 2;

FIG. 15 is a chart illustrating an example of a table of the permission rule held by the signature server according to Embodiment 2;

FIG. 16 is a chart illustrating an example of a remittance request according to Embodiment 2;

FIG. 17 is a chart illustrating an example of a remittance request sent from a web application to the signature server according to Embodiment 2;

FIG. 18 is a chart illustrating an example of a permission rule extracted by the signature server according to Embodiment 2;

FIG. 19 is a chart illustrating another example of determining a permission rule according to Embodiment 3;

FIG. 20 is a diagram illustrating an example of proxy authentication of user authority in the related art; and

FIG. 21 is a diagram illustrating a configuration example of a proxy transaction system for a blockchain in the related art.

## DESCRIPTION OF EMBODIMENTS

Hereinafter, embodiments of a signature server, a signature method, and a signature program according to the present disclosure are described in detail with reference to the drawings.

The disclosed technology may be applied to, for example, a proxy transaction by a blockchain and a signature server which performs a process related to digital signature issue. In this case, in advance, the signature server calculates a permission range of a parameter (for example, a permission range of the remittance amount) in the transaction process based on transaction information of a user, and sets a permission rule to which information on the permission range is given. In the disclosed technology, the signature server keeps and holds authentication information (a secret key) of the user.

For example, at a time of requesting issue of an access token of the user, the signature server sets a permission rule including a permission range of the remittance amount as a permission range of a parameter in the transaction process. After then, when the user actually performs a remittance request after a time elapses, the signature server determines whether or not the remittance amount of the remittance request is within the permission range of the set remittance amount. Therefore, when the remittance amount of the remittance request is within the permission range of the set remittance amount, the signature server issues a digital signature and executes a remittance transaction in the web application (web app). The web application includes, for example, a server and client type web application, a smart contract in a blockchain, a program in the blockchain, and the like. In the proxy transaction, for example, user authority is transferred to the web application, and the web application executes transaction on behalf of the user himself or herself.

Since a currency exchange rate fluctuates in a short time in a case of a virtual currency or the like, there may be a situation in which the transaction amount differs between when the user permits transaction (for example, at a time of issuing an access token) and when the user actually issues a remittance request via the web application. In this case, in the embodiment, the signature server may collate permission contents with the transaction contents of the user at the time of the proxy transaction. At the time of the remittance request when the user actually performs remittance, in a case where the remittance amount is within the permission range even when the currency exchange rate fluctuates, the signature server issues a digital signature, and the user may perform a remittance transaction. When the remittance amount is outside the permission range, the signature server does not permit the remittance transaction and the user may not perform the remittance transaction. Therefore, the user may perform remittance within the permission range of the remittance amount set in the signature server.

(Embodiment 1)

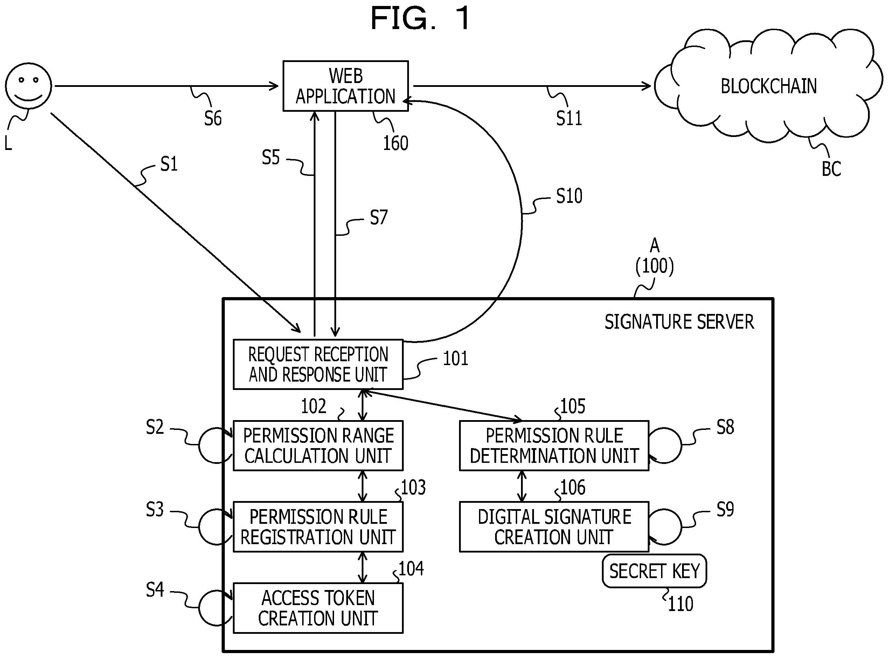

FIG. 1 is a block diagram of a function of a signature server related to a transaction process according to Embodiment 1. In addition to a signature server A (100) according to a transaction process, a user L, a web application 160, and a blockchain BC are illustrated.

A flow of the transaction process will be described. First, the user L transmits an access token issue request to the signature server A (100) (step S1). Therefore, transaction information is registered in the signature server A (100) .

The signature server A (100) includes each of functions of a request reception and response unit 101, a permission range calculation unit 102, a permission rule registration unit 103, an access token creation unit 104, a permission rule determination unit 105, and a digital signature creation unit 106.

The request reception and response unit 101 respectively receives an access token issue request and a signature issue request. The signature issue request includes an access token and transaction information.

Based on the transaction information of the access token issue request, the permission range calculation unit 102 calculates a permission range of a permission rule (a permission range of the remittance amount) (step S2). The permission rule registration unit 103 records the permission range of the permission rule (the permission range of the remittance amount) calculated by the permission range calculation unit 102 in a recording unit (step S3).

The access token creation unit 104 records the access token in association with (associated with) the transaction information (the remittance amount) and the permission rule in the recording unit (step S4). At this time, the request reception and response unit 101 issues an access token to the web application 160 (step S5).

Next, the user L actually transmits a remittance transaction request to the web application 160 (step S6). Therefore, the web application 160 transmits a signature issue request (to which the access token and the transaction information (the remittance amount) are attached) to the signature server A (100) (step S7).

The permission rule determination unit 105 determines whether or not the transaction information (the remittance amount) sent from the web application 160 satisfies the permission rule recorded in the recording unit (step S8). As described below, the permission rule determination unit 105 generates a digital signature and sends the digital signature to the web application 160 only when the transaction information (the remittance amount) satisfies the permission rule recorded in the recording unit.

The digital signature creation unit 106 creates a digital signature of a transaction corresponding to the access token in the signature issue request (step S9). At this time, the digital signature creation unit 106 creates the digital signature by using a secret key 110 held inside the signature server A (100). The secret key 110 corresponds to authentication information for authenticating an account of the user L for a transaction process.

The request reception and response unit 101 of the signature server A (100) sends the digital signature of the transaction corresponding to the access token to the web application 160 (step S10). The web application 160 issues a remittance transaction to which the digital signature sent from the signature server A (100) is attached to the blockchain BC (step S11).

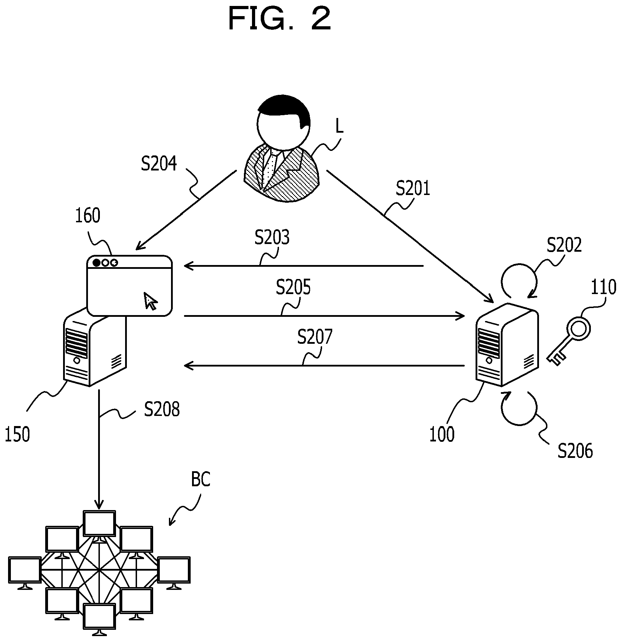

FIG. 2 is a diagram illustrating an example of the transaction process according to Embodiment 1. In Embodiment 1, one blockchain (BC) and one signature server A (100) are provided, and an example of performing remittance as a transaction process from the user L to a user S will be described.

It is assumed that the user L has an account a in the blockchain BC, and the user S also has an account b in the blockchain BC. It is assumed that the user L remits a virtual currency in the account a to the account b of the user S via the web application 160 linked to the blockchain BC. The web application 160 illustrated in FIG. 2 is a display screen when the web application 160 executes a process in a terminal such as a smartphone or the like held by the user L. A reference numeral 150 denotes a server which actually executes the process of the web application 160.

Hereinafter, based on the description of FIG. 2, processing contents mainly performed by the signature server A (100) will be sequentially described.

1. The user L permits the signature server A (100) to issue a signature on behalf of the user L only for a specific remittance request (step S201).

2. The signature server A (100) creates a permission rule obtained by calculating a permission range of the remittance amount based on transaction information of the user L, and associates an access token with the permission rule and registers the permission rule in the recording unit (step S202).

3. The signature server A (100) issues an access token to the web application 160 (step S203).

4. The user L sends the remittance request including information on the remittance amount to the web application 160 (step S204).

5. The web application 160 sends the sent access token and a signature issue request including the transaction information such as the remittance amount to the signature server A (100) (step S205).

6. The signature server A (100) determines whether or not the transaction information including the received remittance amount satisfies the permission rule (the permission range of the remittance amount) associated with the received access token. In a case where the determination result satisfies the permission rule, the signature server A (100) creates a digital signature of the transaction information corresponding to the received access token (step S206).

7. The signature server A (100) sends the created digital signature to the web application 160 (step S207).

8. The web application 160 attaches the received digital signature to a remittance transaction and issues the remittance transaction in the blockchain BC.

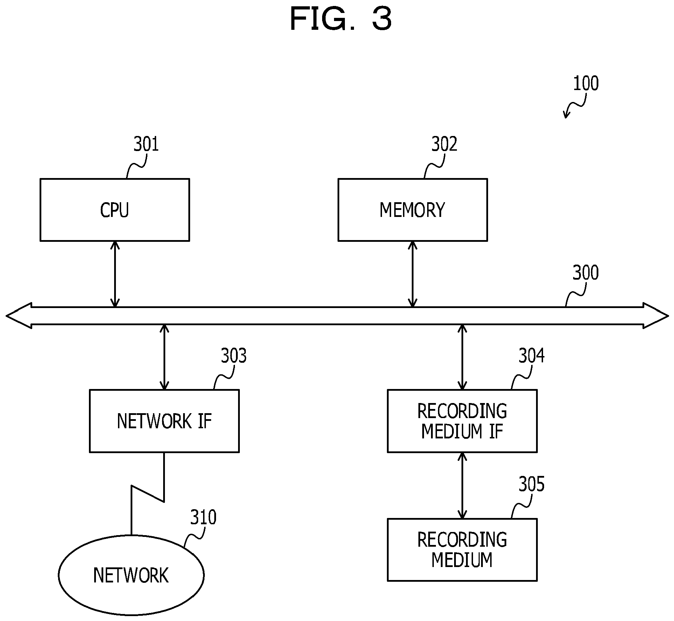

FIG. 3 is a diagram illustrating an example of a hardware configuration of the signature server according to Embodiment 1. The signature server A (100) illustrated in FIG. 1 may be configured by hardware illustrated in FIG. 3, for example.

For example, the signature server A (100) includes a central processing unit (CPU) 301, a memory 302, a network interface (IF) 303, a recording medium IF 304, and a recording medium 305. 300 is a bus which couples each unit.

The CPU 301 is an arithmetic processing device which functions as a processing unit which controls the entire process of the signature server 100. The memory 302 includes non-volatile memory and volatile memory. The non-volatile memory is, for example, a read-only memory (ROM) which stores a program of the CPU 301. The volatile memory is, for example, dynamic random-access memory (DRAM), static random-access memory (SRAM), or the like used as a work area of the CPU 301.

The network IF 303 is communicatively coupled to an external terminal (such as a PC, a smartphone, or the like of the user) via a network 310 such as a local area network (LAN), a wide area network (WAN), the Internet, or the like.

The recording medium IF 304 is an interface for reading and writing information processed by the CPU 301 from and to the recording medium 305. The recording medium 305 is a recording device which assists the memory 302. As the recording medium 305, for example, a hard disk drive (HDD), a solid state drive (SSD), a Universal Serial Bus (USB) flash drive, or the like may be used.

The CPU 301 executes a program recorded in the memory 302 or the recording medium 305 so as to realize each function of the signature server A (100) illustrated in FIG. 1. The memory 302 and the recording medium 305 may realize the function of the recording unit which records and holds information such as the access token, the permission rule, the digital signature, and the like illustrated in FIG. 1.

The hardware configuration illustrated in FIG. 3 is the same in the web application server 150 illustrated in FIG. 2 or the terminal of the user (a smartphone or the like) which executes the web application 160, and a system of the embodiment may be realized by using a general-purpose hardware configuration.

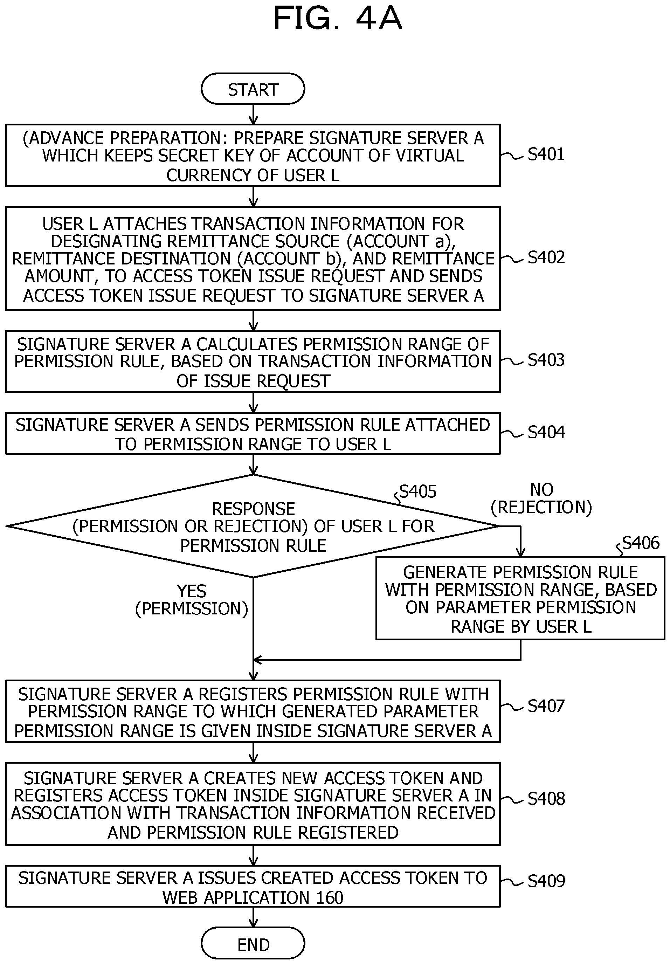

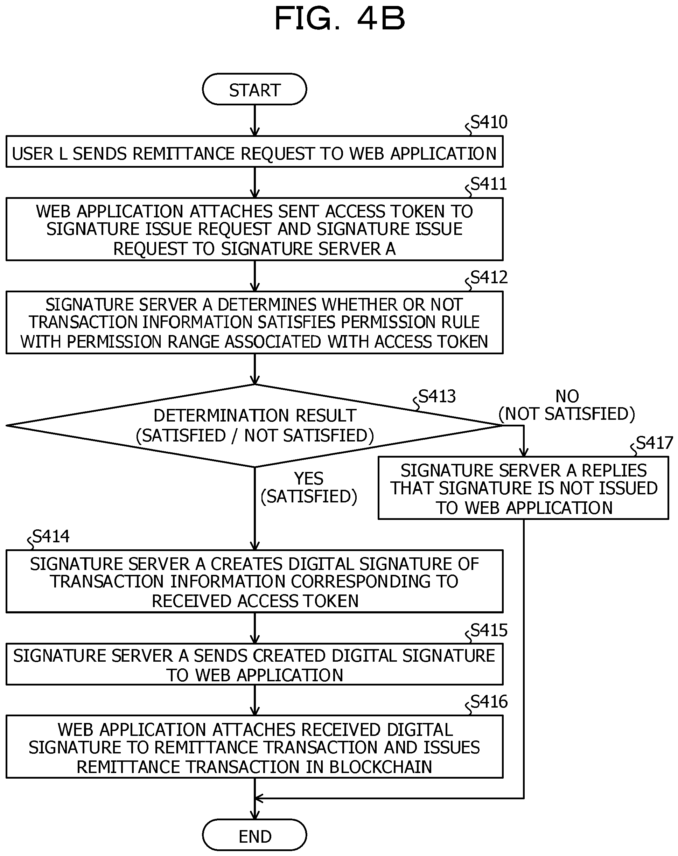

FIGs. 4A and 4B are flowcharts illustrating an example of a transaction process according to Embodiment 1. FIG. 4A illustrates a flow of each process in registration phases of a permission rule (corresponding to steps S201 to S203 in FIG. 2) mainly executed by a processing unit (the CPU 301) of the signature server A (100). FIG. 4B illustrates a flow of each process in remittance phases (corresponding to steps S204 to S208 in FIG. 2) mainly executed by a processing unit (the CPU 301) of the signature server A (100) and the web application 160 (for example, the CPU 301 of the web application server 150).

Meanwhile, the following steps S405 and S406 are sub-processes for verifying a permission rule for the user L. When the permission rule verification of the user L is not required, the signature server A (100) may execute step S407 after the process in step S404.

In the process of the registration phases for the permission rule illustrated in FIG. 4A, first, as an advance preparation, the signature server A (100) which keeps the secret key 110 of an account of a virtual currency of the user L is prepared (step S401).

The user L attaches transaction information for designating a remittance source (the account a), a remittance destination (the account b), and the remittance amount, to an access token issue request and sends the access token issue request to the signature server A (step S402).

Therefore, based on the transaction information of the issue request, the signature server A (100) calculates a permission range of a permission rule (step S403). The signature server A (100) sends the permission rule attached to the permission range (the permission range of the remittance amount) to the user L (step S404).

The signature server A (100) determines a response (permission or rejection) of the user L for the permission rule (step S405). When the response of the user L is permission (Yes in step S405), the signature server A (100) proceeds to the process in step S407. On the other hand, when the response of the user L is rejection (No in step S405), based on the parameter permission range (the permission range of the remittance amount) by the user L, a permission rule with a permission range is generated (step S406), and the process proceeds in step S407.

Next, the signature server A (100) registers the permission rule with the permission range to which the generated parameter permission range is given inside the signature server A (step S407). The signature server A (100) creates a new access token and registers the access token inside the signature server A in association with the transaction information received in step S402 and the registered permission rule (step S408). The signature server A (100) issues the created new access token to the web application 160 (step S409). The signature server A (100) terminates series of processes related to the registration phases of the permission rule.

Next, in the process of the remittance phases illustrated in FIG. 4B, first, the user L sends a remittance request including information on the remittance amount to the web application 160 (step S410). Next, the web application 160 attaches the sent access token to a signature issue request and the signature issue request to the signature server A (100) (step S411).

Therefore, the signature server A (100) determines whether or not the transaction information including the remittance amount satisfies the permission rule with the permission range (the permission range of the remittance amount) associated with the access token (step S412). When the determination result satisfies the permission rule (the remittance amount is within the permission range) (Yes in step S413), the signature server A (100) proceeds to the process in step S414. On the other hand, when the determination result does not satisfy the permission rule (the remittance amount is outside the permission range) (No in step S413), the signature server A (100) proceeds to the process in step S417.

In the process in step S414, the signature server A (100) creates a digital signature of the transaction information corresponding to the received access token (step S414). Next, the signature server A (100) sends the created digital signature to the web application 160 (step S415).

Therefore, the web application 160 attaches the received digital signature to a remittance transaction and issues the remittance transaction in the blockchain BC (step S416). In step S417, the signature server A (100) replies that a digital signature is not issued to the web application 160 (step S417). After the processes in step S416 or step S417, the signature server A (100) terminates series of processes related to the remittance phases.

Next, a specific example of remittance will be described for the transaction process described with reference to FIGs. 4A and 4B. In the advance preparation in step S401, the user L has the account a in the blockchain BC, and the user S has the account b in the blockchain BC. A secret key of the account a is managed by the signature server A (100) for blockchain.

In step S402, in a case of an access token issue request by the user L, a virtual currency in the account a of the user L is remitted to the account b of the user S. As compared with the virtual currency, a legal currency (for example, dollar $, yen Y, or the like) is generally more stable in value, and it is considered to construct a signature issue rule based on a value in the legal currency. In the following description, dollar $ is treated as the legal currency.

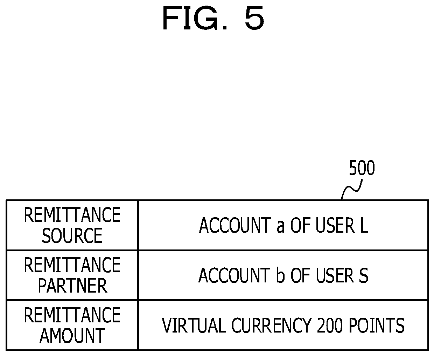

FIG. 5 is a chart illustrating an example of transaction information when a signature is permitted according to Embodiment 1. FIG. 5 illustrates an example of transaction information 500 sent to the signature server A (100) in a case of an access token issue request from the user L in step S402. In the transaction information 500, it is assumed that a remittance source is "the account a of the user L", a remittance partner is "the account b of the user S", and the remittance amount is "virtual currency 200 points".

Next, in step S403, the signature server A (100) creates a permission range according to the following procedure. When the remittance amount included in transaction information at a time of setting a permission rule is X, a permission range described in the following equation (1) is calculated for a remittance amount Y included in a remittance request.

$$X*(1 - K) \leq Y \leq X*(1 + K) \,...\, (1)$$

(K is a constant satisfying $0 < K < 1$)

At this time, for example, when the signature server A (100) sets K = 0.3 in advance and the remittance amount included in the transaction information at the time of creating a permission rule is virtual currency 100 points, the signature server A (100) creates the permission rule described in the following equation (2) as the permission range of the remittance amount Y included in the remittance request.

$$70 \leq Y \leq 130 \,...\, (2)$$

For example, when K = 0.3 and the signature server A (100) receives a transaction of the transaction information 500 illustrated in FIG. 5, it is assumed that a rate of dollar to virtual currency is 3.0 [dollar/virtual currency A]. At this time, based on the permission rule described above, a range of the remittance amount is within a range of 420 to 780 dollars by legal currency exchange.

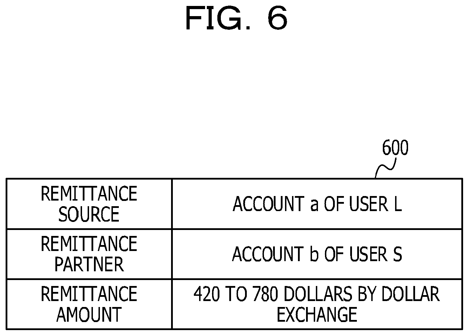

FIG. 6 is a chart illustrating an example of a permission rule generated by the signature server according to Embodiment 1. According to the process in step S403, as a permission rule (the permission range of the remittance amount) 600, the signature server A (100) includes information of a remittance source of "the account a of the user L", a remittance partner of "the account b of the user S", and a range of the remittance amount of "420 to 780 dollars by dollar exchange".

In the process in step S408, the signature server A (100) creates an appropriate character string (for example, "P8mOcv + 6SW") as a new access token. The signature server A (100) associates the permission rule (or the permission rule generated by the user L in step S407) created in step S404 with the access token and adds the permission rule as a new permission rule to the recording unit (a table) inside the signature server A (100).

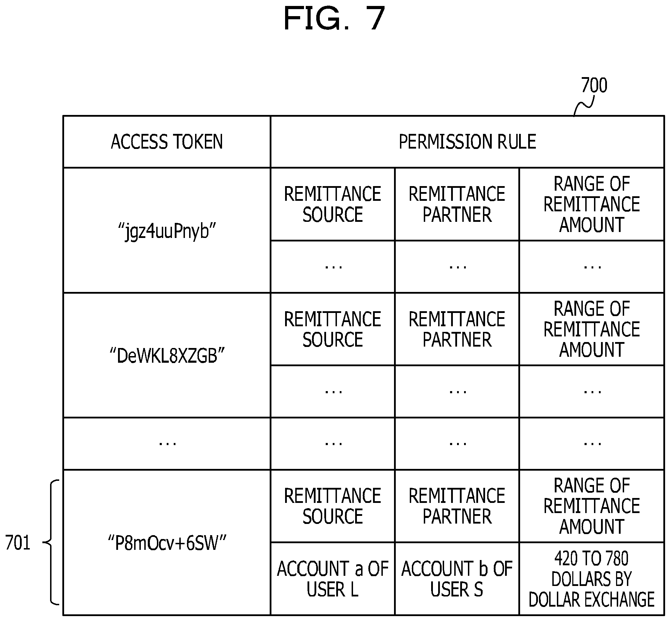

FIG. 7 is a chart illustrating an example of a table of a permission rule held by the signature server according to Embodiment 1. According to the process in step S408, the signature server A (100) adds a new line 701 of the permission rule to a table 700 of the permission rule. The permission rule of the new line 701 includes each information of a new access token of "P8mOcv + 6SW", a remittance source of "the account a of the user L", a remittance partner of "the account b of the user S", and a range of the remittance amount of "420 to 780 dollars by dollar exchange".

Next, in the process in step S409, the signature server A (100) issues the new access token of "P8mOcv + 6SW" to the web application 160.

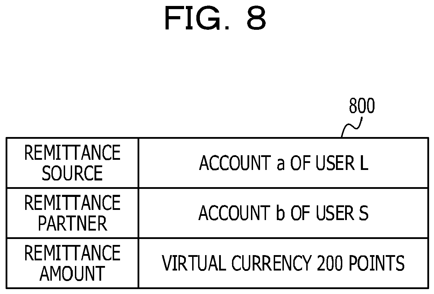

FIG. 8 is a chart illustrating an example of a remittance request according to Embodiment 1. In step S410, the user L sends a remittance request 800 to the web application 160. The remittance request 800 includes information on a remittance source of "the account a of the user L", a remittance partner of "the account b of the user S", and the remittance amount of "virtual currency 200 points".

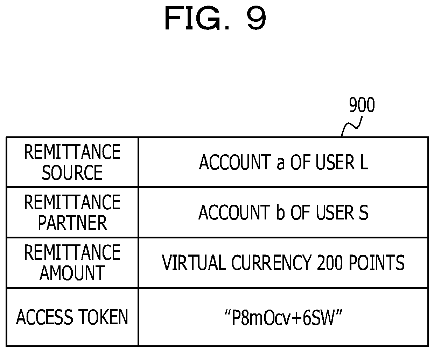

FIG. 9 is a chart illustrating an example of a remittance request sent from a web application to a signature server according to Embodiment 1. In step S411, the web application 160 attaches a received access token to a remittance request 900 and the remittance request 900 to the signature server A (100). The remittance request 900 includes information on a remittance source of "the account a of the user L", a remittance partner of "the account b of the user S", the remittance amount of "virtual currency 200 points", and an access token of "P8mOcv + 6SW".

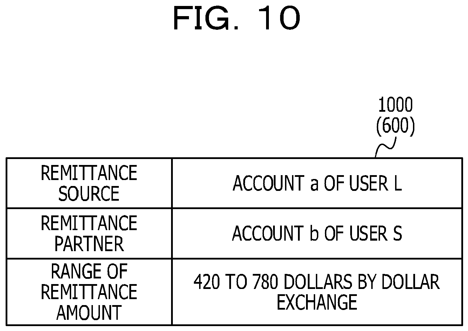

FIG. 10 is a chart illustrating an example of a permission rule extracted by the signature server according to Embodiment 1. In step S412, based on the access token of "P8mOcv + 6SW" included in the remittance request 900, the signature server A (100) extracts the line 701 of which an access token matches with the access token, from the table 700 of the permission rule held by the signature server A (100). A permission rule 1000 included in the extracted line 701 is extracted. The permission rule 1000 illustrated in FIG. 10 has the same information as FIG. 6, and includes information of a remittance source of "the account a of the user L", a remittance partner of "the account b of the user S", and a range of the remittance amount of "420 to 780 dollars by dollar exchange".

In step S413, the signature server A (100) determines whether the remittance amount of the received remittance request 900 satisfies the extracted permission rule 1000. For example, in the case of the remittance request 900, it is assumed that a virtual currency rate fluctuates from 3.0 when a signature is permitted to 3.2 [dollar/virtual currency]. At this time, although the remittance amount is 640 dollars by dollar exchange (since the rate is 3.2 [dollar/virtual currency]), the remittance amount is within a range of the remittance amount of the permission rule 1000 (see FIG. 10), so the signature server A (100) determines that "the permission rule is satisfied" (Yes in step S413).

On the other hand, for example, in the case of the remittance request 900, it is assumed that a virtual currency rate largely fluctuates from 3.0 when the signature is permitted to 2.0 [dollar/virtual currency]. In this case, since a value of the remittance amount in dollars is 400 dollars and outside the range of the remittance amount of the permission rule 1000, the signature server A (100) determines that "the permission rule is not satisfied" (No in step S413). In this case, according to the process in step S417, the signature server A (100) replies that a signature is not issued to the web application 160.

Next, in step S414, the signature server A (100) creates a digital signature corresponding to transaction information only when it is determined that "the permission rule is satisfied (Yes in step S413)" in step S413. Next, in step S415, the signature server A (100) sends the created digital signature to the web application 160.

In step S416, the web application 160 attaches the received digital signature to a remittance transaction and issues the remittance transaction in the blockchain BC.

According to Embodiment 1, one blockchain (BC) and one signature server A (100) are provided, and as a currency rate fluctuates in a case of performing remittance as a transaction process from the user L to the user S, it is possible to collate permission contents of the transaction of the user L with transaction contents at a time of performing an actual remittance. When issuing the access token at a time of permitting the transaction, the signature server A (100) calculates a permission range of the remittance amount, and issues a digital signature only in a case where the remittance amount at the time of the actual remittance is within the permission range. A transaction process of the remittance is permitted.

Therefore, the user L who performs a remittance operation of a virtual currency in the blockchain BC may verify whether or not the remittance amount is within an intended permission content even in a case where there is a time difference or a difference situation between when the transaction is permitted and when a transaction request is actually sent. Since the secret key 110 of the user L is held in the signature server A (100) without being deposited in the web application 160, a proxy transaction may be safely executed.

(Embodiment 2)

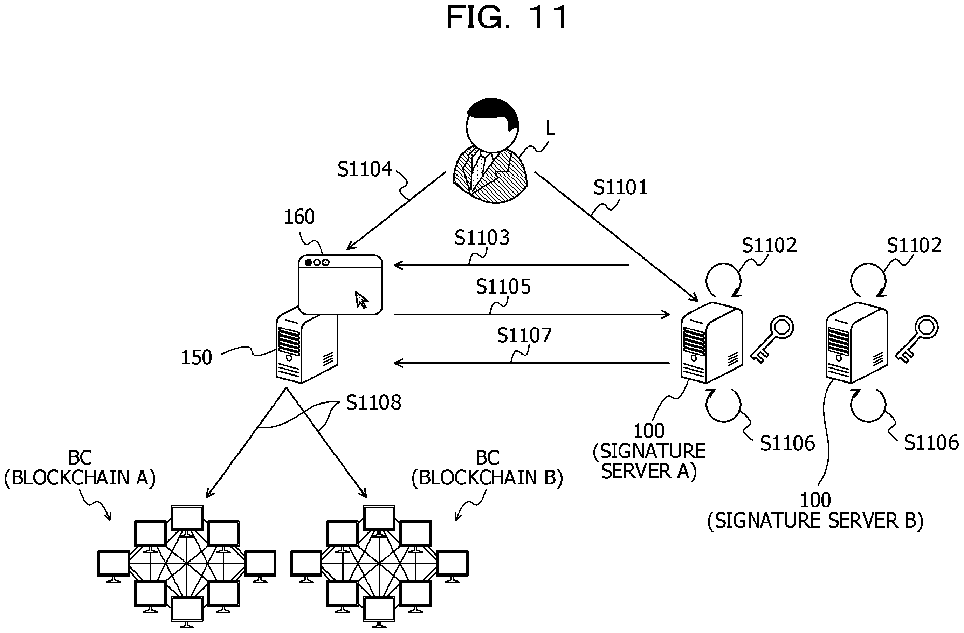

FIG. 11 is a diagram illustrating an example of a transaction process according to Embodiment 2. In Embodiment 2, an example in which a transaction permission rule is determined based on the current remittance amount will be described. In Embodiment 2, the same components as those in Embodiment 1 are denoted by the same reference numerals.

In Embodiment 2, it is assumed that the user L has respectively the accounts a and b in a blockchain A (a virtual currency A) and a blockchain B (a virtual currency B). An example in which the user L exchanges the virtual currency A in the account a for the virtual currency B in the account b via the web application 160 linked with the blockchains will be described.

The secret key 110 of the account a is managed by the signature server A (100) for the blockchain A. The secret key 110 of the account b is managed by a signature server B (100) for the blockchain B. In the transaction process to be described below, the virtual currency A is exchanged for the virtual currency B, and the signature server A (100) performs the process. In a case where the virtual currency B is exchanged for the virtual currency A, the signature server B for the blockchain B as a payment source is required.

Hereinafter, based on the description of FIG. 11, processing contents mainly performed by the signature server A (100) will be sequentially described.

1. The user L permits the signature server A (100) to issue a signature on behalf of the user L only for a specific remittance request (step S1101).

2. The signature server A (100) creates a permission rule obtained by calculating a permission range of the remittance amount based on transaction information of the user L, and associates an access token with the permission rule and registers the permission rule in the recording unit (step S1102).

3. The signature server A (100) issues an access token to the web application 160 (step S1103).

4. The user L sends the remittance request including information on the remittance amount to the web application 160 (step S1104).

5. The web application 160 sends the sent access token and a signature issue request including the transaction information such as the remittance amount to the signature server A (100) (step S1105).

6. The signature server A (100) determines whether or not the transaction information including the received remittance amount satisfies the permission rule (the permission range of the remittance amount) associated with the received access token. In a case where the determination result satisfies the permission rule, the signature server A (100) creates a digital signature of the transaction information corresponding to the received access token (step S1106).

7. The signature server A (100) sends the created digital signature to the web application 160 (step S1107).

8. The web application 160 attaches the received digital signature to a remittance transaction and issues the remittance transaction in the blockchains A and B (step S1108).

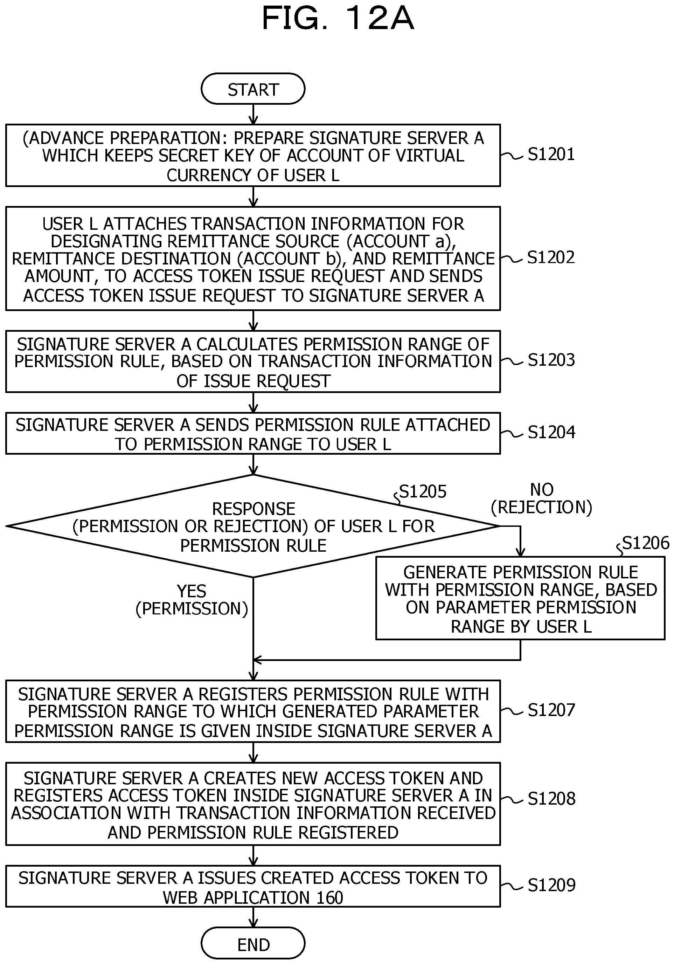

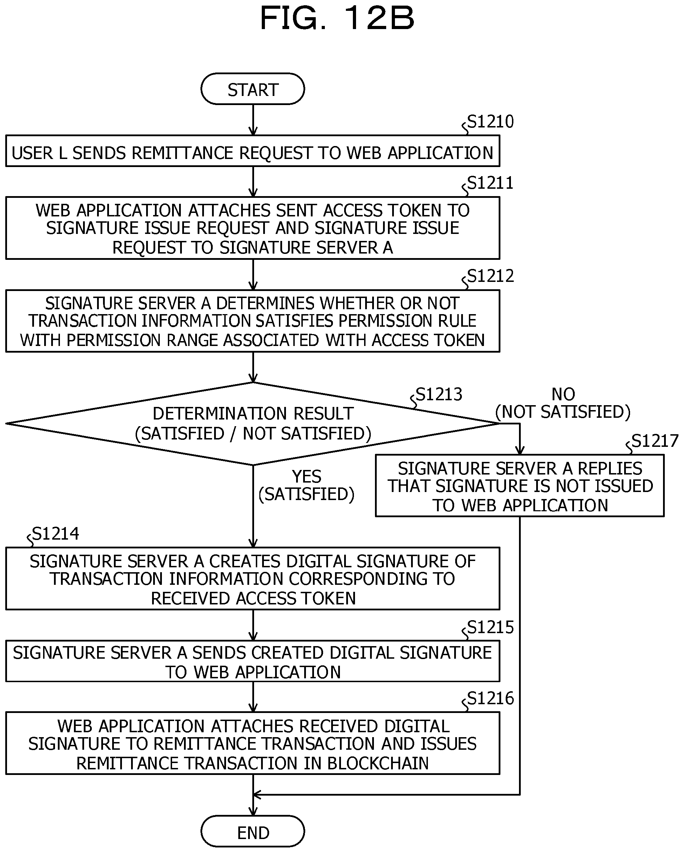

FIGs. 12B and 12B are flowcharts illustrating an example of a transaction process according to Embodiment 2. FIG. 12A illustrates a flow of each process in registration phases of a permission rule (corresponding to steps S1101 to S1103 in FIG. 11) mainly executed by a processing unit (the CPU 301) of the signature server A (100). FIG. 12B illustrates a flow of each process in remittance phases (corresponding to steps S1104 to S1108 in FIG. 11) mainly executed by a processing unit (CPU 301) of the signature server A (100) and the web application 160 (for example, the CPU 301 of the web application server 150).

Meanwhile, the following steps S1205 and S1206 are sub-processes for verifying a permission rule for the user L. When the permission rule verification of the user L is not required, the signature server A (100) may execute step S1207 after the process in step S1204.

In the process of the registration phases for the permission rule illustrated in FIG. 12A, first, as an advance preparation, the signature server A (100) which keeps the secret key 110 of an account of a virtual currency of the user L is prepared (step S1201).

The user L attaches transaction information for designating a remittance source (the account a), a remittance destination (the account b), and the remittance amount, to an access token issue request and sends the access token issue request to the signature server A (step S1202).

Therefore, based on the transaction information of the issue request, the signature server A (100) calculates a permission range of a permission rule (step S1203). The signature server A (100) sends the permission rule attached to the permission range (the permission range of the remittance amount) to the user L (step S1204).

The signature server A (100) determines a response (permission or rejection) of the user L for the permission rule (step S1205). When the response of the user L is permission (Yes in step S1205), the signature server A (100) proceeds to the process in step S1207. On the other hand, when the response of the user L is rejection (No in step S1205), based on the parameter permission range (the permission range of the remittance amount) by the user L, a permission rule with a permission range is generated (step S1206), and the process proceeds in step S1207.

Next, the signature server A (100) registers the permission rule with the permission range to which the generated parameter permission range is given inside the signature server A (step S1207). The signature server A (100) creates a new access token and registers the access token inside the signature server A in association with the transaction information received in step S1202 and the registered permission rule (step S1208). The signature server A (100) issues the created new access token to the web application 160 (step S1209). The signature server A (100) terminates series of processes related to the registration phases of the permission rule.

Next, in the process of the remittance phases illustrated in FIG. 12B, first, the user L sends a remittance request including information on the remittance amount to the web application 160 (step S1210). Next, the web application 160 attaches the sent access token to a signature issue request and the signature issue request to the signature server A (100) (step S1211).

Therefore, the signature server A (100) determines whether or not the transaction information including the remittance amount satisfies the permission rule with the permission range (the permission range of the remittance amount) associated with the access token (step S1212). When the determination result satisfies the permission rule (the remittance amount is within the permission range) (Yes in step S1213), the signature server A (100) proceeds to the process in step S1214. On the other hand, when the determination result does not satisfy the permission rule (the remittance amount is outside the permission range) (No in step S1213), the signature server A (100) proceeds to the process in step S1217.

In the process in step S1214, the signature server A (100) creates a digital signature of the transaction information corresponding to the received access token (step S1214). Next, the signature server A (100) sends the created digital signature to the web application 160 (step S1215).

Therefore, the web application 160 attaches the received digital signature to a remittance transaction and issues the remittance transaction in the blockchains A and B (step S1216). In step S1217, the signature server A (100) replies that a digital signature is not issued to the web application 160 (step S1217). After the processes in step S1216 or step S1217, the signature server A (100) terminates series of processes related to the remittance phases.

Next, a specific example of remittance will be described for the transaction process described with reference to FIGs. 12A and 12B. In the advance preparation in step S1201, the user L has respectively the accounts a and b in the blockchain A (the virtual currency A) and the blockchain B (the virtual currency B). The secret key of the account a is managed by the signature server A for the blockchain A. Although the example in which the virtual currency A is exchanged for the virtual currency B is described, in a case where the virtual currency B is exchanged for the virtual currency A, the signature server B (100) for the blockchain B as a payment source is required.

In step S1202, the user L exchanges the virtual currency A in the account a for the virtual currency B in the account b. As compared with the virtual currency A, the virtual currency B is more stable in value, and it is considered to construct a signature issue rule based on a value in the legal currency B. In this example, since a remittance source is the virtual currency A and the secret key is managed by the signature server A (100), it is assumed that the signature server A (100) sets a permission rule for a transaction.

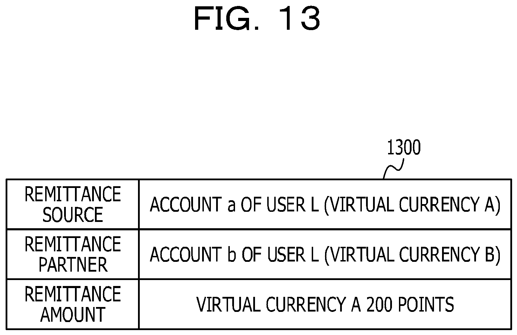

FIG. 13 is a chart illustrating an example of transaction information when a signature is permitted according to Embodiment 2. FIG. 13 illustrates an example of transaction information 1300 sent to the signature server A (100) in a case of an access token issue request from the user L in step S1202. In the transaction information 1300, it is assumed that a remittance source is "the account a (the virtual currency A) of the user L", a remittance partner is "the account b (the virtual currency B) of the user L", and the remittance amount is "virtual currency A 200 points".

Next, in step S1203, the signature server A (100) creates a permission range according to the following procedure. When the remittance amount included in transaction information at a time of setting a permission rule is X, a permission range described in the following equation (3) is calculated for the remittance amount Y included in a remittance request.

$$X*(1 - K) \leq Y \leq X*(1 + K) \ ... \ (3)$$

(K is a constant satisfying 0 < K < 1)

At this time, when the signature server A (100) sets K = 0.3 in advance and the remittance amount included in the transaction information at the time of creating a permission rule is virtual currency 100 points, the signature server A (100) creates the permission rule described in the following equation (4) as the permission range of the remittance amount Y included in the remittance request.

$$70 \leq Y \leq 130 \ ... \ (4)$$

For example, when K = 0.3 and the signature server A (100) receives a transaction of the transaction information 1300 illustrated in FIG. 13, it is assumed that a rate of the virtual currency B to the virtual currency A is 3.0 [virtual currency B/virtual currency A]. At this time, based on the permission rule described above, a range of the remittance amount is within a range of 420 to 780 points in virtual currency B exchange.

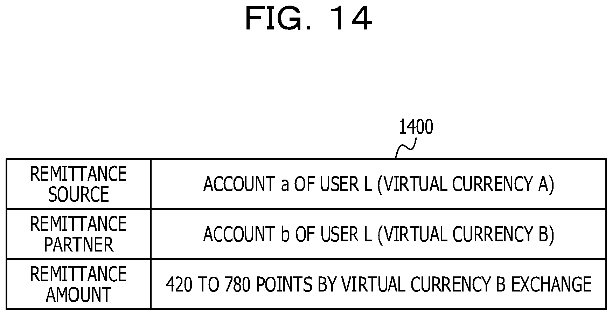

FIG. 14 is a chart illustrating an example of a permission rule generated by a signature server according to Embodiment 2. According to the process in step S1203, the signature server A (100) creates a permission rule (a permission range of the remittance amount) 1400. The permission rule (the permission range of the remittance amount) 1400 includes information of a remittance destination of "the account a (the virtual currency A) of the user L", a remittance partner of "the account b (the virtual currency B) of the user L", and a range of the remittance amount of "420 to 780 points by virtual currency B exchange".

In the process in step S1208, the signature server A (100) creates an appropriate character string (for example, "P8mOcv + 6SW") as a new access token. The signature server A (100) associates the permission rule (or the permission rule generated by the user L in step S1207) created in step S1204 with the access token and adds the permission rule as a new permission rule to the recording unit (a table) inside the signature server A (100).

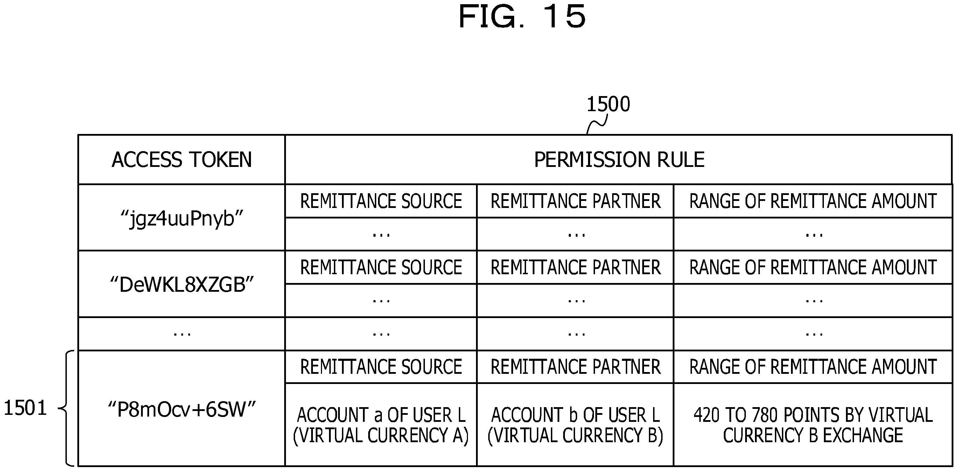

FIG. 15 is a chart illustrating an example of a table of the permission rule held by the signature server according to Embodiment 2. According to the process in step S1208, the signature server A (100) adds a new line 1501 of the permission rule to a table 1500 of the permission rule. The new line 1501 includes each information of a new access token of "P8mOcv + 6SW", a remittance source of "the account a (the virtual currency A) of the user L", a remittance destination of "the account b (the virtual currency B) of the user L", and a range of the remittance amount of "420 to 780 points by virtual currency B exchange".

Next, in the process in step S1209, the signature server A (100) issues the new access token of "P8mOcv + 6SW" to the web application 160.

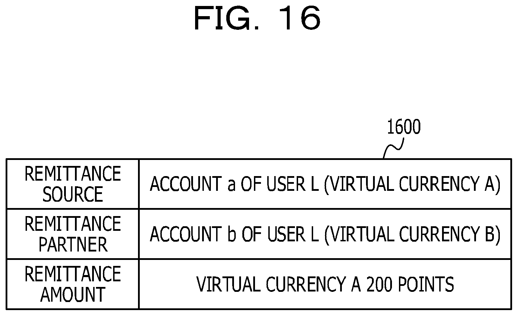

FIG. 16 is a chart illustrating an example of a remittance request according to Embodiment 2. In step S1210, the user L sends a remittance request 1600 to the web application 160. The remittance request 1600 includes information of a remittance source of "the account a (the virtual currency A) of the user L", a remittance partner is "the account b (the virtual currency B) of the user L", and the remittance amount of "virtual currency A 200 points".

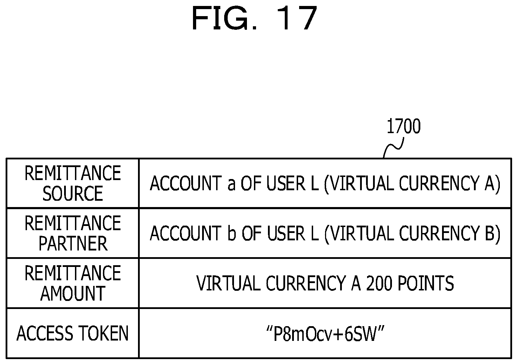

FIG. 17 is a chart illustrating an example of a remittance request sent from a web application to the signature server according to Embodiment 2. In step S1211, the web application 160 attaches a received access token to a remittance request 900 and a remittance request 1700 to the signature server A (100). The remittance request 1700 includes information on a remittance source of "the account a (the virtual currency A) of the user L", a remittance partner of "the account b (the virtual currency B) of the user L", the remittance amount of "virtual currency A 200 points", and an access token of "P8mOcv + 6SW".

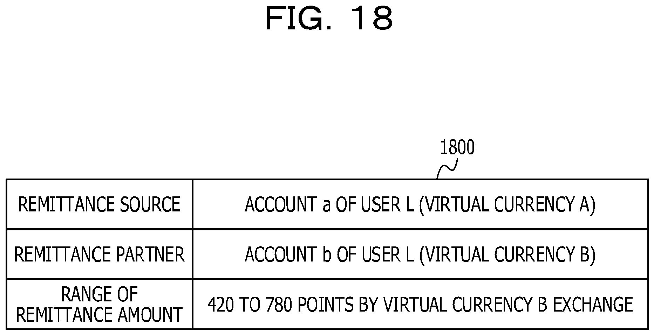

FIG. 18 is a chart illustrating an example of a permission rule extracted by the signature server according to Embodiment 2. In step S1212, based on the access token of "P8mOcv + 6SW" of the remittance request 1700, the signature server A (100) extracts the line 1501 of which an access token matches with the access token, from the table 1500 of the permission rule held by the signature server A (100). A permission rule 1800 included in the extracted line 1501 is extracted. The permission rule 1800 illustrated in FIG. 18 has the same information as that in FIG. 14, and includes information of a remittance destination of "the account a (the virtual currency A) of the user L", a remittance partner of "the account b (the virtual currency B) of the user L", and a range of the remittance amount of "420 to 780 points by virtual currency B exchange".

In step S1213, the signature server A (100) determines whether the remittance amount of the received remittance request 1700 satisfies the extracted permission rule 1800. For example, in the case of the remittance request 1700, it is assumed that a virtual currency rate fluctuates from 3.0 when a signature is permitted to 3.2 [virtual currency B/virtual currency A]. At this time, the remittance amount is 640 points by virtual currency B exchange (since the rate is 3.2 [virtual currency B/virtual currency A]). Since the remittance amount of 640 points is within a range of the remittance amount of the permission rule 1800 (see FIG. 18), the signature server A (100) determines that "the permission rule is satisfied" (Yes in step S1213).

On the other hand, for example, in the case of the remittance request 1700, it is assumed that a virtual currency rate largely fluctuates from 3.0 when the signature is permitted to 2.0 [virtual currency B/virtual currency A]. In this case, since a value of the remittance amount in virtual currency B is 400 points and outside the range of the remittance amount of the permission rule 1800, the signature server A (100) determines that "the permission rule is not satisfied" (No in step S1213). In this case, according to the process in step S1217, the signature server A (100) replies that a signature is not issued to the web application 160.

Next, in step S1214, the signature server A (100) creates a digital signature corresponding to transaction information only when it is determined that "the permission rule is satisfied (Yes in step S1213)" in step S1213. Next, in step S1215, the signature server A (100) sends the created digital signature to the web application 160.

In step S1216, the web application 160 attaches the received digital signature to a remittance transaction and issues the remittance transaction in the blockchains A and B.

According to Embodiment 2, as a currency rate fluctuates in a case where the user L performs remittance of exchanging between the virtual currencies A and B in the two blockchains A and B, it is possible to collate permission contents of the transaction of the user L with transaction contents at a time of performing an actual remittance. When issuing the access token at a time of permitting the transaction, the signature server A (100) calculates a permission range of the remittance amount, and issues a digital signature only in a case where the remittance amount at the time of the actual remittance is within the permission range. A transaction process of the remittance is permitted.

Therefore, the user L who performs a remittance operation of the virtual currency A in the blockchain A may verify whether or not the remittance amount is within an intended permission content even in a case where there is a time difference or a difference situation between when the transaction is permitted and when a transaction request is actually sent. Since the secret key 110 of the user L is held in the signature server A (100) without being deposited in the web application 160, a proxy transaction may be safely executed.

(Embodiment 3)

In Embodiment 3, an example in which a transaction permission rule is determined based on a past transaction of the user L will be described. Another example in which the signature server A (100) described in Embodiments 1 and 2 calculates a permission range of the remittance amount (corresponding to step S403 and step S1203) will be described.

When the remittance amount included in transaction information (500 and 1300) at a time of setting a permission rule is X, the signature server A (100) calculates a permission range described in the following equation (5) for the remittance amount Y included in the remittance request (900 and 1700).

$$X*(M/U) \leq Y \leq X*(M/L) \ldots (5)$$

(M is an average of currency exchange rates for a most recent certain period, L is a lower limit of a 95% confidence interval of the currency exchange rate for the most recent certain period, and U is an upper limit of a 95% confidence interval of the currency exchange rate for the most recent certain period.)

The processing unit (the CPU 301) of the signature server A (100) records the currency exchange rate for the most recent certain period and the lower and upper limits of the confidence interval in a recording unit (such as the recording medium 305 or the like).

The currency exchange rate uses a rate of [virtual currency/base currency] after determining a base currency (a currency which is a center of a currency exchange). When calculating the upper and lower limits of the confidence interval, distribution of the value of the currency exchange rate is assumed to be normal distribution.

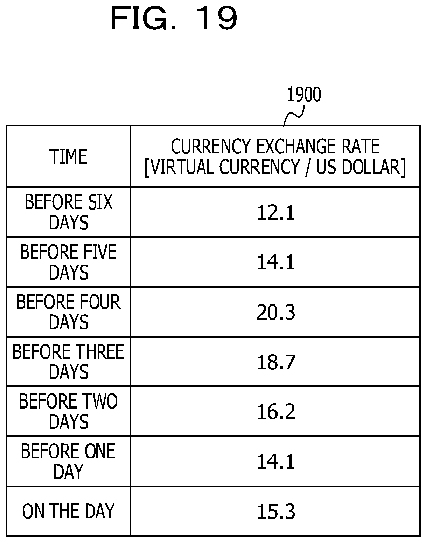

FIG. 19 is a chart illustrating another example of determining a permission rule according to Embodiment 3. For example, it is assumed that the remittance amount included in the transaction information (500 and 1300) at a time of creating a permission rule is virtual currency 100 points, and a currency exchange rate [virtual currency/US dollar] for most recent one week is in a state illustrated in FIG. 19. In this case, the signature server A (100) calculates M = 15.83, L = 13.20, and U = 18.46 by calculating an average and a 95% confidence interval. At this time, X*(M/U) = 85.8 and X*(M/L) = 119.9, and 85.8 ≤ Y ≤ 119.9 is calculated as a permission range of the remittance amount Y included in a remittance request.

According to Embodiment 3, it is possible to calculate the permission range of the remittance amount based on a currency exchange rate of transactions performed for the past certain period. Therefore, based on information on a transaction process actually performed by the user L, it is possible to create the permission rule along an intended transaction of the user L. In the example described above, the permission range of the remittance amount is calculated based on the transactions performed by the user L for the past certain period, but the permission range of the remittance amount may be calculated based on transactions performed by another user for the past certain period without being limited thereto. For example, in a case or the like in which the user L does not perform a transaction in the past certain period, the user L may use the permission range of the remittance amount calculated based on transactions performed by the other user for the past certain period, and even a user with a small number of transactions may perform an appropriate remittance.

(Embodiment 4)

In Embodiment 4, variations of a smart contract (an application example to various systems) will be described. In each of the embodiments described above, the application example to the proxy authentication system for remittance of the virtual currency is described. Without being limited thereto, the same may be applied to a proxy authentication function of the web application 160 for issuing and operating a smart contract in a blockchain.

When the signature server A (100) verifies a request of issuing a digital signature from the web application 160, in a case of a transaction of executing a smart contract, a permission rule with a permission range may be set for an argument value. In this regard, in each of the embodiments described above, at the time of a remittance request, the signature server A (100) calculates the permission range of the remittance amount so as to create a permission rule.

As an application example to various systems, there is a smart contract of a side dish section in a supermarket, for example. The user gives surveying instrument an authority to "pay for 300 grams of side dish with one point of virtual currency" in advance. When the surveying instrument measures the side dish within a range of 250 to 350 grams, a smart contract interlocked with the surveying instrument may perform payment with the virtual currency on behalf of the user.

Without being limited to the virtual currency, a parameter (a setting value or a condition of the permission range) of a smart contract in various transaction processes including a transaction with a point card may be set in the same manner as in the embodiment described above. Therefore, it becomes possible to collate permission contents of the transaction of the user with transaction contents when using the actual system. The user of the web application may execute the transaction process with the remittance amount or the like along an intended permission content even in a case where there is a time difference or a difference situation between when the transaction is permitted and when a transaction request is actually sent.

Difference between Related Art and Embodiment

A difference between the related art and the embodiment will be described. In the related art, for example, an OAuth 2.0 technology is widely known as a mechanism for transferring an authority of a user to another application. This technology includes a mechanism in which an access authority of the user is partly transferred to a web application by using an access token so that the web application performs a process on behalf of the user. As described above, the access token is a symbol (a character string) indicating that only a specific operation is permitted on behalf of the user.

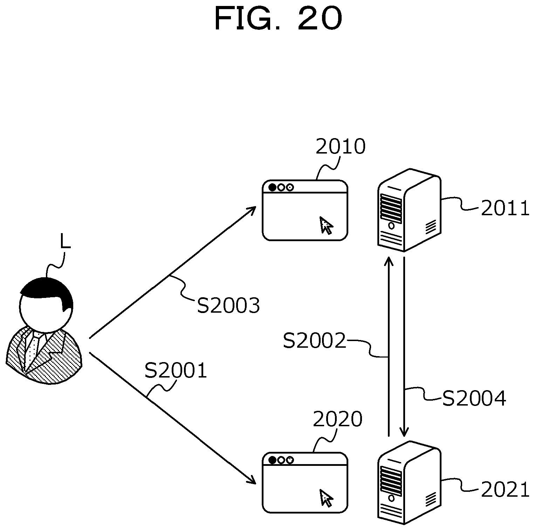

FIG. 20 is a diagram illustrating an example of proxy authentication of user authority in the related art. In the example in FIG. 20, it is assumed that the user L has access authority to a video posting site 2010 (a video posting site server 2011) and an SNS site 2020 (an SNS site server 2021). In advance, the user L permits that "the video posting site 2010 performs posting on the SNS site 2020 on behalf of the user L himself or herself' for the SNS site 2020 (step S2001). In this case, the SNS site 2020 issues an access token to the video posting site 2010 (step S2002).

It is assumed that the user L posts a video to the video posting site 2010 (step S2003). In this case, the video posting site 2010 attaches the access token to the SNS site 2020 on behalf of the user L and posts the video (step S2004). In this manner, in a case where the user L registers a video in the video posting site 2010, by using an access token registered in advance, it is possible to perform proxy authentication when the video posting site 2010 automatically posts the video or the like to the SNS site 2020 with authority of the user L.

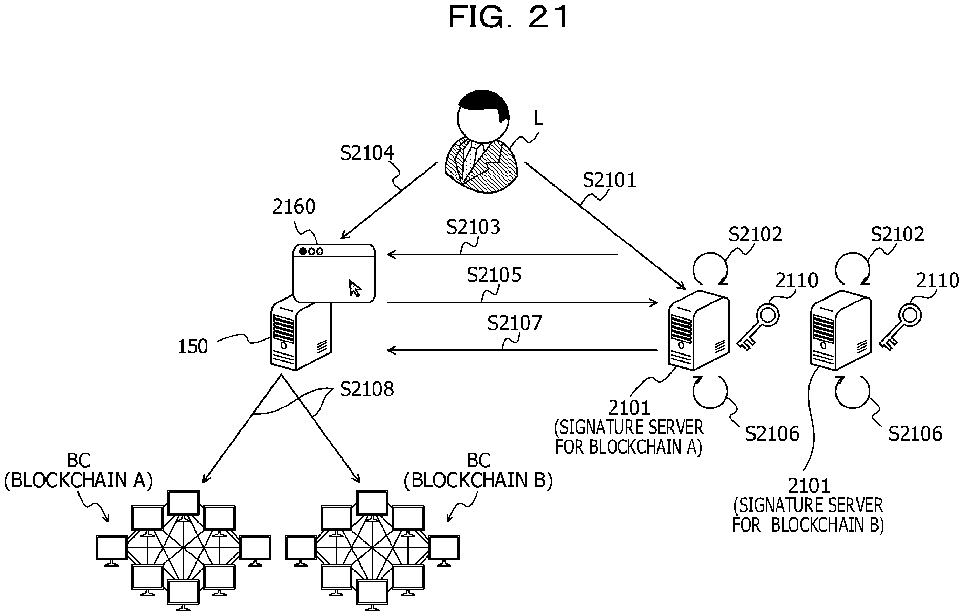

FIG. 21 is a diagram illustrating a configuration example of a proxy transaction system for a blockchain in the related art. It is assumed that a virtual currency transaction system including proxy authentication as illustrated in FIG. 21 is configured by using the OAuth 2.0 technology described above. Signature servers A and B (2101) hold a secret key 2110 of the user L for the blockchains A and B. As illustrated in FIG. 21, the user L may access a web application 2160 (a web application server 2150).

In order to sequentially describe a flow of proxy authentication in the system configuration illustrated in FIG. 21, first, the user L permits the signature servers A and B (2101) to issue a signature only for a specific remittance request (a remittance source, a remittance partner, and the remittance amount) (step S2101). The signature servers A and B (2101) register an access token in association with transaction information (step S2102). The signature servers A and B (2101) issue the access token to the web application 2160 (step S2103).

After then, when there is a remittance request by the user L (step S2104), the web application 2160 requests the signature servers A and B (2101) to issue a digital signature (step S2105). The signature servers A and B (2101) use mechanism of the access token so as to verify whether transaction contents coincide with permission contents of the user L (step S2106), and issue a signature to the web application 2160 when the transaction contents coincide with the permission contents (step S2107). Therefore, the web application 2160 issues a transaction in the blockchains A and B as a proxy transaction of the user L by using the signature received from the signature servers A and B (2101) (step S2108).

In the system configuration in the related art, it is difficult to collate permission content intended by a user with actual transaction contents. For example, in an exchange of a virtual currency, a currency exchange rate fluctuates in a short time. For this reason, the transaction amount differs between when the user L permits the signature (at a time of issuing an access token in step S2101) and when the user actually performs remittance via the web application 2160 (at a time of issuing a remittance request in step S2104).

For description using a specific example, in a transaction system of a virtual currency, it is assumed that a rate of the virtual currency to a base currency (for example, US dollar) fluctuates, and a permission rule of the signature servers A and B (2101) is configured based on a value of the base currency. When a signature is permitted ("use date: September 14, 2018, 15:00", in step S2101), it is assumed that "a rate of US dollar to virtual currency A is 2.0 USD/virtual currency A". In this case, when 100 points of the virtual currency A are transferred, a value in US dollars is 200 USD. The signature servers A and B (2101) set a signature issue rule as "pass a signature when a user sends a transaction corresponding to 200 USD to a designated destination".

Meanwhile, it is assumed that the rate of the virtual currency fluctuates until the remittance is actually permitted ("use date: September 14, 2018, 15:30", in step S2104) and "a rate of US dollar to the virtual currency A is 1.8 USD/virtual currency A". In this case, even in a transaction for transferring 100 points of the same virtual currency A, a value in US dollar is 180 USD, and the signature servers A and B (2101) may not issue a signature in step S2107 for this transaction.

In this manner, in the related art, in the virtual currency transaction system with proxy authentication to which the OAuth 2.0 technology is simply applied to, there is a time difference or a difference situation between when the user L permits a transaction and when a transaction request is actually sent, so it is not possible to collate permission contents with transaction contents. In this case, for example, the user may not verify whether or not the remittance amount is within an intended permission range of the remittance amount. In a case where the signature server does not issue a signature, the transaction itself may not be performed.

In the related art, the web application held the secret key of the user and exchanges information with the blockchain during the transaction process. Since the secret key is held by the web application, there is also a concern that proxy transactions may not be safely executed.

On the other hand, in the embodiment described above, the signature server sets a permission rule obtained by calculating a permission range of the remittance amount based on transaction information of the user, and determines whether or not a remittance request of the user is within the permission rule. Therefore, even when a currency exchange rate fluctuates due to a time difference or a difference situation between when the user of the web application permits the transaction and when the remittance request is actually sent, the signature server may verify whether the remittance amount of the user is within the intended permission range based on the permission rule. In addition, the user may perform remittance within the permission range of the remittance amount, and may reduce unintentional under or over the remittance amount.

In the embodiment, since the signature server holds the secret key of the user, a proxy transaction may be safely performed as compared with the related art. Even when linking a plurality of blockchain, the corresponding plurality of signature server respectively and distributively hold secret keys of the user, so that the proxy transaction may be safely executed even when linking the plurality of blockchain.

According to the embodiment described above, in response to reception of a token issue request including transaction information from a user, the signature server generates a permission rule for determining a permission range of transaction contents based on the transaction information, and transmits a token corresponding to the permission rule to the web application which processes a proxy transaction of the user. According to receiving a signature issue request based on a transaction request by the user including the token from the web application, whether or not to issue a digital signature corresponding to the signature issue request is determined, based on whether or not the transaction contents included in the transaction request are within the permission range determined by the permission rule corresponding to the token included in the signature issue request. Therefore, collation between permission contents of the transaction at the time of the token issue request and actual transaction contents is performed. For example, it is possible to verify whether or not the remittance amount of the user is within the permission range of the intended remittance amount. The signature server determines whether or not the actual transaction contents satisfy the permission range of the permission rule, and when the actual transaction contents satisfy the permission range, the signature server issues a digital signature and causes the web application (the Web app) to execute the remittance transaction. The transaction process performed in the embodiment may be applied to a proxy transaction by a blockchain and a signature server.

In a case where a transaction is remittance of an amount of money or points with currency values by a user, at a time of a token issue request from the user, the signature server determines a permission range of the remittance amount for a permission rule. At the time of an actual remittance request by the user, it is determined whether or not the remittance amount included in the remittance request is within the permission range in the permission rule. Therefore, it becomes possible to collate permission contents of the user at the time of the proxy transaction with actual transaction contents by applying to the remittance in the virtual currency or the like.

Since a currency exchange rate fluctuates in a short time in the virtual currency or the like, there may be a situation in which even in a case of the same remittance amount, the transaction amount differs between when being permitted by the user (at a time of issuing an access token) and when the user actually issues a remittance request via the web application due to a change of the currency exchange rate. In this case, it is possible to verify whether or not the remittance amount is within the permission range, and even when the remittance amount fluctuates at the currency exchange rate at the time of actual remittance, in a case where the remittance amount is within the permission range, a digital signature is issued and a proxy transactions by the web application may be appropriately performed.

Only in a case where the remittance amount included in the remittance request is within the permission range in the permission rule, the signature server may determine that issue of a digital signature of the transaction information to the web application is permitted and issue the digital signature to the web application. Therefore, at the time of the remittance request when the user actually performs remittance, in a case where the remittance amount is within the permission range, the signature server issues a digital signature, and the user may perform a remittance transaction. On the other hand, when the remittance amount is outside the permission range, the remittance transaction is not permitted. The user may perform the remittance within the permission range of the remittance amount set in the signature server.

The signature server may hold authentication information for authenticating the transaction process by the user, and create a digital signature by using the authentication information. By keeping and holding the authentication information (a secret key) of the user in the signature server, it is not required for the web application to hold the secret key in the related art, and a proxy transaction may be safely executed.

For each token issue request including transaction information from the user, the signature server additionally creates information in which a remittance source, a remittance destination, a permission range of the remittance amount, and a token for each user are associated with each other in a table, as information of the permission rule. At the time of the actual remittance request by the user, a permission rule corresponding to the remittance request may be extracted by referring to the permission rule of the table, and it may be determined whether or not the remittance amount of the extracted permission rule is within the permission range of the remittance amount. Therefore, each time the user performs a transaction, a history of the transaction contents may be tabulated and accumulated, and a permission rule appropriate to each user may be created and remittance may be appropriately processed based on the appropriate permission rule for each user.

The signature server may calculate a value obtained by multiplying the remittance amount included in the transaction information at the time of creating the permission rule by a predetermined coefficient as a maximum value and a minimum value defining the permission range of the remittance amount. Therefore, the permission range of the remittance amount may be appropriately set, and an actual remittance process may be appropriately executed by using the permission range.

The signature server may calculate the permission range of the remittance amount by using the currency exchange rate included in the current or past transaction information of the user or another user. Therefore, it becomes possible to appropriately set the permission range of the remittance amount according to a transaction status of the user, and it becomes possible to appropriately process the remittance based on the permission rule appropriate to each user. Even a user with a small number of transactions may perform appropriate remittance by using transaction information of the other user.

The signature server may notify the user of the calculated permission rule, perform a determination using the permission rule by permission of the user, and perform the determination using a permission rule created by the user when being rejected by the user. Therefore, according to the permission rule created by the signature server, the remittance may be appropriately performed based on the permission of the user. Since the remittance may be performed by using the permission rule created by the user when the user rejects the permission rule created by the signature server, a transaction of the remittance according to the intention of the user may be performed.

The transaction may be a smart contract using one or a plurality of blockchain accounts, and at the time of a transaction when the smart contract is executed, a determination is performed by using a permission rule for a request for issuing a digital signature from the web application. Therefore, the transaction process described in the embodiment may be applied to various systems, and the transaction process in the applied various systems may be appropriately executed by using the permission rule.

The signature method described in the embodiment of the present disclosure may be enabled by causing a processor such as a server or the like to execute a program prepared in advance. The present signature method is recorded in a computer-readable recording medium such as a hard disk, a compact disc-read only memory (CD-ROM), a flash memory, or the like, and executed by being read from the recording medium by the computer. The present signing method may be distributed via a network such as the Internet.

**Claims**

**1.** A signature server comprising:

a processing unit that is configured to, in response to reception of a token issue request including transaction information from a user, generate a permission rule for determining a permission range of transaction contents based on the transaction information and transmit a token corresponding to the permission rule to a web application which processes a proxy transaction for the user, and

in response to reception of a signature issue request based on a transaction request by the user including the token from the web application, determine whether or not to issue a digital signature corresponding to the signature issue request, based on whether or not the transaction contents included in the transaction request are within the permission range determined by the permission rule corresponding to the token included in the signature issue request,

wherein in a case where a transaction is remittance of an amount of money or points with currency values by the user, the processing unit is configured to

determine a permission range of a remittance amount in the permission rule at a time of the token issue request from the user, and

determine whether or not the remittance amount included in a remittance request is within the permission range in the permission rule at a time of the remittance request by the user,

wherein the processing unit is configured to calculate a value obtained by multiplying the remittance amount included in the transaction information at the time of creating the permission rule by a predetermined coefficient, as a maximum value and a minimum value defining the permission range of the remittance amount.

**2.** The signature server according to claim 1, wherein only in a case where the remittance amount included in the remittance request is within the permission range in the permission rule, the processing unit is configured to determine that issue of a digital signature of the transaction information to the web application is permitted and issues the digital signature to the web application.

**3.** The signature server according to claim 2, wherein the processing unit is configured to hold authentication information for authenticating a transaction process by the user, and to create the digital signature by using the authentication information.

**4.** The signature server according to any one of claims 2 to 3,

wherein for each token issue request including transaction information from the user, the processing unit is configured to additionally create information in which information about a remittance source, a remittance destination, a permission range of the remittance amount, and a token for each user are associated with each other in a table, as information about the permission rule, and

extract the permission rule corresponding to the remittance request by referring to the permission rule of the table, and determines whether or not the remittance amount of the extracted permission rule is within the permission range of the remittance amount, at a time of the remittance request by the user.

5. The signature server according to any one of claims 2 to 4,

wherein the processing unit is configured to calculate the permission range of the remittance amount by using a currency exchange rate included in current or past transaction information of the user or another user.

6. The signature server according to any one of claims 2 to 5

wherein the processing unit is configured to notify the user of the calculated permission rule and perform a determination using the permission rule by permission of the user, and perform the determination using the permission rule created by the user at a time of rejection by the user.

7. The signature server according to any one of claims 1 to 6,

wherein the transaction is a smart contract using one or a plurality of blockchain accounts, and at a time of the transaction to execute the smart contract, a determination is performed by using the permission rule in response to a request for issuing a digital signature from the web application.

8. A signature method causing a computer to execute a process, the process comprising:

in response to a token issue request including transaction information from a user, generating a permission rule for determining a permission range of transaction contents based on the transaction information and transmitting a token corresponding to the permission rule to a web application which processes a proxy transaction for the user,
in response to a signature issue request including the token from the web application based on a transaction request by the user, determining whether or not to issue a digital signature corresponding to the signature issue request, based on whether or not the transaction contents included in the transaction request are within the permission range determined by the permission rule corresponding to the token included in the signature issue request,
determining a permission range of a remittance amount in the permission rule at a time of the token issue request from the user in a case where a transaction is remittance of an amount of money or points with currency values by the user,
determining whether or not the remittance amount included in a remittance request is within the permission range in the permission rule at a time of the remittance request by the user, and calculating a value obtained by multiplying the remittance amount included in the transaction information at the time of creating the permission rule by a predetermined coefficient, as a maximum value and a minimum value defining the permission range of the remittance amount.

9. A signature program causing a computer to execute a process, the process comprising:

in response to a token issue request including transaction information from a user, generating a permission rule for determining a permission range of transaction contents based on the transaction information and transmitting a token corresponding to the permission rule to a web application which processes a proxy transaction for the user,
in response to a signature issue request including the token from the web application based on a transaction request by the user, determining whether or not to issue a digital signature corresponding to the signature issue request, based on whether or not the transaction contents included in the transaction request are within the permission range determined by the permission rule corresponding to the token included in the signature issue request,
determining a permission range of a remittance amount in the permission rule at a time of the token issue request from the user in a case where a transaction is remittance of an amount of money or points with currency values by the user,
determining whether or not the remittance amount included in a remittance request is within the permission range in the permission rule at a time of the remittance request by the user, and calculating a value obtained by multiplying the remittance amount included in the transaction information at the time of creating the permission rule by a predetermined coefficient, as a maximum value and a minimum value defining the permission range of the remittance amount.

**Patentansprüche**

1.  Signaturserver, umfassend:

    eine Verarbeitungseinheit, die dazu konfiguriert ist, als Reaktion auf einen Empfang einer Token-Ausgabeanforderung, die eine Transaktionsinformation von einem Benutzer enthält, eine Erlaubnisregel zum Bestimmen eines Erlaubnisbereichs von Transaktionsinhalten auf der Grundlage der Transaktionsinformation zu erzeugen und ein der Erlaubnisregel entsprechendes Token an eine Webanwendung, die eine Proxy-Transaktion für den Benutzer verarbeitet, zu übertragen, und
    als Reaktion auf einen Empfang einer Signaturausgabeanforderung auf der Grundlage einer Transaktionsanforderung durch den Benutzer, die das Token von der Webanwendung enthält, zu bestimmen, ob eine der Signaturausgabeanforderung entsprechende digitale Signatur ausgegeben wird oder nicht, basierend darauf, ob die in der Transaktionsanforderung enthaltenen Transaktionsinhalte innerhalb des Erlaubnisbereichs, der durch die Erlaubnisregel bestimmt wird, die dem in der Signaturausgabeanforderung enthaltenen Token entspricht, liegen oder nicht
    wobei in einem Fall, in dem eine Transaktion eine Überweisung eines Geldbetrags oder von Punkten mit Währungswerten durch den Benutzer ist, die Verarbeitungseinheit dazu konfiguriert ist,
    einen Erlaubnisbereich eines Überweisungsbetrags in der Erlaubnisregel zu einem Zeitpunkt der Token-Ausgabeanforderung von dem Benutzer zu bestimmen, und
    zu bestimmen, ob der in einer Überweisungsanforderung enthaltene Überweisungsbetrag zu einem Zeitpunkt der Überweisungsanforderung durch den Benutzer innerhalb des Erlaubnisbereichs in der Erlaubnisregel liegt oder nicht,
    wobei die Verarbeitungseinheit dazu konfiguriert ist, einen Wert, der durch Multiplizieren des in der Transaktionsinformation enthaltenen Überweisungsbetrags zu dem Zeitpunkt eines Erstellens der Erlaubnisregel mit einem vorbestimmten Koeffizienten erhalten wird, als einen Maximalwert und einen Minimalwert, die den Erlaubnisbereich des Überweisungsbetrags definieren, zu berechnen.

2.  Signaturserver nach Anspruch 1, wobei nur in einem Fall, in dem der in der Überweisungsanforderung enthaltene Überweisungsbetrag innerhalb des Erlaubnisbereichs in der Erlaubnisregel liegt, die Verarbeitungseinheit dazu konfiguriert ist, zu bestimmen, dass eine Ausgabe einer digitalen Signatur der Transaktionsinformationen an die Webanwendung erlaubt ist und die digitale Signatur an die Webanwendung ausgibt.

3.  Signaturserver nach Anspruch 2, wobei die Verarbeitungseinheit dazu konfiguriert ist, eine Authentifizierungsinformation zum Authentifizieren eines Transaktionsprozesses durch den Benutzer zu speichern und die digitale Signatur unter Verwendung der Authentifizierungsinformation zu erstellen.

4.  Signaturserver nach einem der Ansprüche 2 bis 3,

    wobei die Verarbeitungseinheit dazu konfiguriert ist, für jede Token-Ausgabeanforderung, die eine Transaktionsinformation von dem Benutzer enthält, zusätzlich eine Information zu erstellen, in der eine Information über eine Überweisungsquelle, ein Überweisungsziel, einen Erlaubnisbereich des Überweisungsbetrags und ein Token für jeden Benutzer als Information über die Erlaubnisregel in einer Tabelle miteinander verbunden sind, und
    die der Überweisungsanforderung entsprechende Erlaubnisregel durch Bezugnahme auf die Erlaubnisregel der Tabelle zu extrahieren, und zu bestimmen, ob der Überweisungsbetrag der extrahierten Erlaubnisregel zu einem Zeitpunkt der Überweisungsanforderung durch den Benutzer innerhalb des Erlaubnisbereichs des Überweisungsbetrags liegt oder nicht.

5.  Signaturserver nach einem der Ansprüche 2 bis 4, wobei die Verarbeitungseinheit dazu konfiguriert ist, den Erlaubnisbereich des Überweisungsbetrags unter Verwendung eines Währungskurses zu berechnen, der in einer aktuellen oder vergangenen Transaktionsinformation des Benutzers oder eines anderen Benutzers enthalten ist.

6.  Signaturserver nach einem der Ansprüche 2 bis 5,

    wobei die Verarbeitungseinheit dazu konfiguriert ist, den Benutzer über die berechnete Erlaubnisregel zu benachrichtigen und eine Bestimmung unter Verwendung der Erlaubnisregel durch Erlaubnis des Benutzers durchzuführen, und
    die Bestimmung unter Verwendung der von dem Benutzer zu einem Zeitpunkt einer Ablehnung durch den Benutzer erstellten Berechtigungsregel durchzuführen.

7.  Signaturserver nach einem der Ansprüche 1 bis 6,

    wobei die Transaktion ein intelligenter Vertrag ist, der ein oder eine Vielzahl von Blockchain-Konten verwendet, und
    zu einem Zeitpunkt der Transaktion zum Ausführen des intelligenten Vertrags eine Bestimmung unter Verwendung der Erlaubnisregel als Reaktion auf eine Anforderung zum Ausstellen einer digitalen Signatur von der Webanwendung durchgeführt wird.

8.  Signaturverfahren, das einen Computer veranlasst, einen Prozess auszuführen, wobei der Prozess umfasst:

    als Reaktion auf eine Token-Ausgabeanforderung, die eine Transaktionsinformation von einem Benutzer enthält, Erzeugen einer Erlaubnisregel zum Bestimmen eines Erlaubnisbereichs von Transaktionsinhalten auf der Grundlage der Transaktionsinformation und Übertragen eines der Erlaubnisregel entsprechenden Tokens an eine Webanwendung, die eine Proxy-Transaktion für den Benutzer verarbeitet,
    als Reaktion auf eine Signaturausgabeanforderung, die das Token von der Webanwendung auf der Grundlage einer Transaktionsanforderung durch den Benutzer enthält, Bestimmen, ob eine der Signaturausgabeanforderung entsprechende digitale Signatur ausgegeben wird oder nicht, basierend darauf, ob die in der Transaktionsanforderung enthaltenen Transaktionsinhalte innerhalb des Erlaubnisbereichs, der durch die Erlaubnisregel bestimmt wird, die dem in der Signaturausgabeanforderung enthaltenen Token entspricht, liegen oder nicht,
    Bestimmen eines Erlaubnisbereichs eines Überweisungsbetrags in der Erlaubnisregel zu einem Zeitpunkt der Tokenausgabeanforderung von dem Benutzer in einem Fall, in dem eine Transaktion die Überweisung eines Geldbetrags oder von Punkten mit Währungswerten durch den Benutzer ist,
    Bestimmen, ob der in einer Überweisungsanforderung enthaltene Überweisungsbetrag zu einem Zeitpunkt der Überweisungsanforderung durch den Benutzer innerhalb des Erlaubnisbereichs in der Erlaubnisregel liegt oder nicht, und
    Berechnen eines Wertes, der durch Multiplizieren des Überweisungsbetrages, der in der Transaktionsinformation zu dem Zeitpunkt eines Erstellens der Erlaubnisregel enthalten ist, mit einem vorbestimmten Koeffizienten erhalten wird, als einen Maximalwert und einen Minimalwert, die den Erlaubnisbereich des Überweisungsbetrages definieren.

9.  Signaturprogramm, das einen Computer veranlasst, einen Prozess auszuführen, wobei der Prozess umfasst:

    als Reaktion auf eine Token-Ausgabeanforderung, die eine Transaktionsinformation von einem Benutzer enthält, Erzeugen einer Erlaubnisregel zum Bestimmen eines Erlaubnisbereichs von Transaktionsinhalten auf der Grundlage der Transaktionsinformation und Übertragen eines der Erlaubnisregel entsprechenden Tokens an eine Webanwendung, die eine Proxy-Transaktion für den Benutzer verarbeitet,
    als Reaktion auf eine Signaturausgabeanforderung, die das Token von der Webanwendung auf der Grundlage einer Transaktionsanforderung durch den Benutzer enthält, Bestimmen, ob eine der Signaturausgabeanforderung entsprechende digitale Signatur ausgegeben wird oder nicht, basierend darauf, ob die in der Transaktionsanforderung enthaltenen Transaktionsinhalte innerhalb des Erlaubnisbereichs, der durch die Erlaubnisregel bestimmt wird, die dem in der Signaturausgabeanforderung enthaltenen Token entspricht, liegen oder nicht,
    Bestimmen eines Erlaubnisbereichs eines Überweisungsbetrags in der Erlaubnisregel zu einem Zeitpunkt der Tokenausgabeanforderung von dem Benutzer in einem Fall, in dem eine Transaktion die Überweisung eines Geldbetrags oder von Punkten mit Währungswerten durch den Benutzer ist,
    Bestimmen, ob der in einer Überweisungsanforderung enthaltene Überweisungsbetrag zu einem Zeitpunkt der Überweisungsanforderung durch den Benutzer innerhalb des Erlaubnisbereichs in der Erlaubnisregel liegt oder nicht, und
    Berechnen eines Wertes, der durch Multiplizieren des Überweisungsbetrages, der in der Transaktionsinformation zu dem Zeitpunkt eines Erstellens der Erlaubnisregel enthalten ist, mit einem vorbestimmten Koeffizienten erhalten wird, als einen Maximalwert und einen Minimalwert, die den Erlaubnisbereich des Überweisungsbetrages definieren.

**Revendications**

1.  Serveur de signature comprenant :

    une unité de traitement qui est configurée pour, en réponse à la réception d'une requête de délivrance de token incluant des informations de transaction d'un utilisateur, générer une règle de permission pour déterminer une plage de permission de contenus de transaction sur la base des informations de transaction et transmettre un token correspondant à la règle de permission à une application web qui traite une transaction proxy pour l'utilisateur, et

en réponse à la réception d'une requête de délivrance de signature basée sur une requête de transaction par l'utilisateur incluant le token provenant de l'application web, déterminer s'il faut délivrer ou non une signature numérique correspondant à la requête de délivrance de signature, sur la base du fait que les contenus de transaction inclus dans la requête de transaction sont ou non dans la plage de permission déterminée par la règle de permission correspondant au token inclus dans la requête de délivrance de signature,

dans lequel, dans un cas où une transaction est un paiement d'un montant d'argent ou de points avec des valeurs monétaires par l'utilisateur, l'unité de traitement est configurée pour

déterminer une plage de permission d'un montant de paiement dans la règle de permission à un moment de la requête de délivrance de token de l'utilisateur, et

déterminer si le montant de paiement inclus dans une requête de paiement est ou non dans la plage de permission dans la règle de permission à un moment de la requête de paiement par l'utilisateur,

dans lequel l'unité de traitement est configurée pour calculer une valeur obtenue en multipliant le montant de paiement inclus dans les informations de transaction au moment de la création de la règle de permission par un coefficient prédéterminé, en tant qu'une valeur maximale et une valeur minimale définissant la plage de permission du montant de paiement.

2. Serveur de signature selon la revendication 1, dans lequel, uniquement dans un cas où le montant de paiement inclus dans la requête de paiement est dans la plage de permission dans la règle de permission, l'unité de traitement est configurée pour déterminer que la délivrance d'une signature numérique des informations de transaction à l'application web est permise et délivre la signature numérique à l'application web.

3. Serveur de signature selon la revendication 2, dans lequel l'unité de traitement est configurée pour contenir des informations d'authentification pour authentifier un processus de transaction par l'utilisateur, et pour créer la signature numérique en utilisant les informations d'authentification.

4. Serveur de signature selon l'une quelconque des revendications 2 à 3,

dans lequel, pour chaque requête de délivrance de token incluant des informations de transaction de l'utilisateur, l'unité de traitement est configurée pour créer de manière supplémentaire des informations dans lesquelles des informations concernant une source de paiement, une destination de paiement, une plage de permission du montant de paiement, et un token pour chaque utilisateur sont associées les unes avec les autres dans un tableau, en tant qu'informations concernant la règle de permission, et extraire la règle de permission correspondant à la requête de paiement en se référant à la règle de permission du tableau, et déterminer si le montant de paiement de la règle de permission extraite est ou non dans la plage de permission du montant de paiement, à un moment de la requête de paiement par l'utilisateur.

5. Serveur de signature selon l'une quelconque des revendications 2 à 4, dans lequel l'unité de traitement est configurée pour calculer la plage de permission du montant de paiement en utilisant un taux de change de devises inclus dans des informations de transaction actuelles ou passées de l'utilisateur ou d'un autre utilisateur.

6. Serveur de signature selon l'une quelconque des revendications 2 à 5,

dans lequel l'unité de traitement est configurée pour notifier l'utilisateur de la règle de permission calculée et effectuer une détermination en utilisant la règle de permission par la permission de l'utilisateur, et

effectuer la détermination en utilisant la règle de permission créée par l'utilisateur à un moment de rejet par l'utilisateur.

7. Serveur de signature selon l'une quelconque des revendications 1 à 6,

dans lequel la transaction est un contrat intelligent utilisant un ou une pluralité de comptes de chaîne de blocs, et

à un moment de la transaction pour exécuter le contrat intelligent, une détermination est effectuée en utilisant la règle de permission en réponse à une requête pour délivrer une signature numérique depuis l'application web.

8. Procédé de signature amenant un ordinateur à exécuter un processus, le processus comprenant les étapes consistant à :

en réponse à une requête de délivrance de token incluant des informations de transaction d'un utilisateur, générer un règle de permission pour déterminer une plage de permission de contenus de transaction sur la base des informations de transaction et transmettre un token correspondant à la règle de permission à une application web qui traite une transaction proxy pour l'utilisateur,

en réponse à une requête de délivrance de signature incluant le token provenant de l'application web basée sur une requête de transaction par l'utilisateur, déterminer s'il faut délivrer ou non une signature numérique correspondant à la requête de délivrance de signature, sur la base du fait que les contenus de transaction inclus dans la requête de transaction sont ou non dans la plage de permission déterminée par la règle de permission correspondant au token inclus dans la requête de délivrance de signature,

déterminer une plage de permission d'un montant de paiement dans la règle de permission à un moment de la requête de délivrance de token de l'utilisateur dans un cas où une transaction est un paiement d'un montant d'argent ou de points avec des valeurs monétaires par l'utilisateur,

déterminer si le montant de paiement inclus dans une requête de paiement est ou non dans la plage de permission dans la règle de permission à un moment de la requête de paiement par l'utilisateur, et

calculer une valeur obtenue en multipliant le montant de paiement inclus dans les informations de transaction au moment de la création de la règle de permission par un coefficient prédéterminé, en tant qu'une valeur maximale et une valeur minimale définissant la plage de permission du montant de paiement.

la plage de permission déterminée par la règle de permission correspondant au token inclus dans la requête de délivrance de signature,

déterminer une plage de permission d'un montant de paiement dans la règle de permission à un moment de la requête de délivrance de token de l'utilisateur dans un cas où une transaction est un paiement d'un montant d'argent ou de points avec des valeurs monétaires par l'utilisateur,

déterminer si le montant de paiement inclus dans une requête de paiement est ou non dans la plage de permission dans la règle de permission à un moment de la requête de paiement par l'utilisateur, et

calculer une valeur obtenue en multipliant le montant de paiement inclus dans les informations de transaction au moment de la création de la règle de permission par un coefficient prédéterminé, en tant qu'une valeur maximale et une valeur minimale définissant la plage de permission du montant de paiement.

9. Programme de signature amenant un ordinateur à exécuter un processus, le processus comprenant les étapes consistant à :

en réponse à une requête de délivrance de token incluant des informations de transaction d'un utilisateur, générer une règle de permission pour déterminer une plage de permission de contenus de transaction sur la base des informations de transaction et transmettre un token correspondant à la règle de permission à une application web qui traite une transaction proxy pour l'utilisateur,

en réponse à une requête de délivrance de signature incluant le token provenant de l'application web basée sur une requête de transaction par l'utilisateur, déterminer s'il faut délivrer ou non une signature numérique correspondant à la requête de délivrance de signature, sur la base du fait que les contenus de transaction inclus dans la requête de transaction sont ou non dans

# FIG. 1

EP 3 680 795 B1

# FIG. 2

# FIG. 3

# FIG. 4A

START

(ADVANCE PREPARATION: PREPARE SIGNATURE SERVER A WHICH KEEPS SECRET KEY OF ACCOUNT OF VIRTUAL CURRENCY OF USER L) — S401

USER L ATTACHES TRANSACTION INFORMATION FOR DESIGNATING REMITTANCE SOURCE (ACCOUNT a), REMITTANCE DESTINATION (ACCOUNT b), AND REMITTANCE AMOUNT, TO ACCESS TOKEN ISSUE REQUEST AND SENDS ACCESS TOKEN ISSUE REQUEST TO SIGNATURE SERVER A — S402

SIGNATURE SERVER A CALCULATES PERMISSION RANGE OF PERMISSION RULE, BASED ON TRANSACTION INFORMATION OF ISSUE REQUEST — S403

SIGNATURE SERVER A SENDS PERMISSION RULE ATTACHED TO PERMISSION RANGE TO USER L — S404

RESPONSE (PERMISSION OR REJECTION) OF USER L FOR PERMISSION RULE — S405

NO (REJECTION)

GENERATE PERMISSION RULE WITH PERMISSION RANGE, BASED ON PARAMETER PERMISSION RANGE BY USER L — S406

YES (PERMISSION)

SIGNATURE SERVER A REGISTERS PERMISSION RULE WITH PERMISSION RANGE TO WHICH GENERATED PARAMETER PERMISSION RANGE IS GIVEN INSIDE SIGNATURE SERVER A — S407

SIGNATURE SERVER A CREATES NEW ACCESS TOKEN AND REGISTERS ACCESS TOKEN INSIDE SIGNATURE SERVER A IN ASSOCIATION WITH TRANSACTION INFORMATION RECEIVED AND PERMISSION RULE REGISTERED — S408

SIGNATURE SERVER A ISSUES CREATED ACCESS TOKEN TO WEB APPLICATION 160 — S409

END

# FIG. 4B

START

S410
USER L SENDS REMITTANCE REQUEST TO WEB APPLICATION

S411
WEB APPLICATION ATTACHES SENT ACCESS TOKEN TO
SIGNATURE ISSUE REQUEST AND SIGNATURE ISSUE
REQUEST TO SIGNATURE SERVER A

S412
SIGNATURE SERVER A DETERMINES WHETHER OR NOT
TRANSACTION INFORMATION SATISFIES PERMISSION RULE
WITH PERMISSION RANGE ASSOCIATED WITH ACCESS TOKEN

S413
DETERMINATION RESULT
(SATISFIED / NOT SATISFIED)

NO
(NOT SATISFIED)

YES
(SATISFIED)

S417
SIGNATURE SERVER A REPLIES
THAT SIGNATURE IS NOT ISSUED
TO WEB APPLICATION

S414
SIGNATURE SERVER A CREATES DIGITAL SIGNATURE OF
TRANSACTION INFORMATION CORRESPONDING TO
RECEIVED ACCESS TOKEN

S415
SIGNATURE SERVER A SENDS CREATED DIGITAL SIGNATURE
TO WEB APPLICATION

S416
WEB APPLICATION ATTACHES RECEIVED DIGITAL
SIGNATURE TO REMITTANCE TRANSACTION AND ISSUES
REMITTANCE TRANSACTION IN BLOCKCHAIN

END

# FIG. 5

500

| REMITTANCE SOURCE | ACCOUNT a OF USER L |
|---|---|
| REMITTANCE PARTNER | ACCOUNT b OF USER S |
| REMITTANCE AMOUNT | VIRTUAL CURRENCY 200 POINTS |

# FIG. 6

600

| REMITTANCE SOURCE | ACCOUNT a OF USER L |
|---|---|
| REMITTANCE PARTNER | ACCOUNT b OF USER S |
| REMITTANCE AMOUNT | 420 TO 780 DOLLARS BY DOLLAR EXCHANGE |

# FIG. 7

700

| ACCESS TOKEN | PERMISSION RULE | | |
|---|---|---|---|
| "jgz4uuPnyb" | REMITTANCE SOURCE | REMITTANCE PARTNER | RANGE OF REMITTANCE AMOUNT |
| | ... | ... | ... |
| "DeWKL8XZGB" | REMITTANCE SOURCE | REMITTANCE PARTNER | RANGE OF REMITTANCE AMOUNT |
| | ... | ... | ... |
| ... | ... | ... | ... |
| "P8mOcv+6SW" | REMITTANCE SOURCE | REMITTANCE PARTNER | RANGE OF REMITTANCE AMOUNT |
| | ACCOUNT a OF USER L | ACCOUNT b OF USER S | 420 TO 780 DOLLARS BY DOLLAR EXCHANGE |

701

# FIG. 8

800

| REMITTANCE SOURCE | ACCOUNT a OF USER L |
|---|---|
| REMITTANCE PARTNER | ACCOUNT b OF USER S |
| REMITTANCE AMOUNT | VIRTUAL CURRENCY 200 POINTS |

# FIG. 9

900

| REMITTANCE SOURCE | ACCOUNT a OF USER L |
|---|---|
| REMITTANCE PARTNER | ACCOUNT b OF USER S |
| REMITTANCE AMOUNT | VIRTUAL CURRENCY 200 POINTS |
| ACCESS TOKEN | "P8mOcv+6SW" |

# FIG. 10

1000
(600)

| REMITTANCE SOURCE | ACCOUNT a OF USER L |
|---|---|
| REMITTANCE PARTNER | ACCOUNT b OF USER S |
| RANGE OF REMITTANCE AMOUNT | 420 TO 780 DOLLARS BY DOLLAR EXCHANGE |

# FIG. 11

EP 3 680 795 B1

# FIG. 12A

START

(ADVANCE PREPARATION: PREPARE SIGNATURE SERVER A WHICH KEEPS SECRET KEY OF ACCOUNT OF VIRTUAL CURRENCY OF USER L ~ S1201

USER L ATTACHES TRANSACTION INFORMATION FOR DESIGNATING REMITTANCE SOURCE (ACCOUNT a), REMITTANCE DESTINATION (ACCOUNT b), AND REMITTANCE AMOUNT, TO ACCESS TOKEN ISSUE REQUEST AND SENDS ACCESS TOKEN ISSUE REQUEST TO SIGNATURE SERVER A ~ S1202

SIGNATURE SERVER A CALCULATES PERMISSION RANGE OF PERMISSION RULE, BASED ON TRANSACTION INFORMATION OF ISSUE REQUEST ~ S1203

SIGNATURE SERVER A SENDS PERMISSION RULE ATTACHED TO PERMISSION RANGE TO USER L ~ S1204

S1205
RESPONSE (PERMISSION OR REJECTION) OF USER L FOR PERMISSION RULE

NO (REJECTION)

S1206
GENERATE PERMISSION RULE WITH PERMISSION RANGE, BASED ON PARAMETER PERMISSION RANGE BY USER L

YES (PERMISSION)

SIGNATURE SERVER A REGISTERS PERMISSION RULE WITH PERMISSION RANGE TO WHICH GENERATED PARAMETER PERMISSION RANGE IS GIVEN INSIDE SIGNATURE SERVER A ~ S1207

SIGNATURE SERVER A CREATES NEW ACCESS TOKEN AND REGISTERS ACCESS TOKEN INSIDE SIGNATURE SERVER A IN ASSOCIATION WITH TRANSACTION INFORMATION RECEIVED AND PERMISSION RULE REGISTERED ~ S1208

SIGNATURE SERVER A ISSUES CREATED ACCESS TOKEN TO WEB APPLICATION 160 ~ S1209

END

# FIG. 12B

START

S1210

USER L SENDS REMITTANCE REQUEST TO WEB APPLICATION

S1211

WEB APPLICATION ATTACHES SENT ACCESS TOKEN TO SIGNATURE ISSUE REQUEST AND SIGNATURE ISSUE REQUEST TO SIGNATURE SERVER A

S1212

SIGNATURE SERVER A DETERMINES WHETHER OR NOT TRANSACTION INFORMATION SATISFIES PERMISSION RULE WITH PERMISSION RANGE ASSOCIATED WITH ACCESS TOKEN

S1213

DETERMINATION RESULT (SATISFIED / NOT SATISFIED)

NO (NOT SATISFIED)

S1217

SIGNATURE SERVER A REPLIES THAT SIGNATURE IS NOT ISSUED TO WEB APPLICATION

YES (SATISFIED)

S1214

SIGNATURE SERVER A CREATES DIGITAL SIGNATURE OF TRANSACTION INFORMATION CORRESPONDING TO RECEIVED ACCESS TOKEN

S1215

SIGNATURE SERVER A SENDS CREATED DIGITAL SIGNATURE TO WEB APPLICATION

S1216

WEB APPLICATION ATTACHES RECEIVED DIGITAL SIGNATURE TO REMITTANCE TRANSACTION AND ISSUES REMITTANCE TRANSACTION IN BLOCKCHAIN

END

# FIG. 13

1300

| REMITTANCE SOURCE | ACCOUNT a OF USER L (VIRTUAL CURRENCY A) |
|---|---|
| REMITTANCE PARTNER | ACCOUNT b OF USER L (VIRTUAL CURRENCY B) |
| REMITTANCE AMOUNT | VIRTUAL CURRENCY A 200 POINTS |

# FIG. 14

1400

| REMITTANCE SOURCE | ACCOUNT a OF USER L (VIRTUAL CURRENCY A) |
|---|---|
| REMITTANCE PARTNER | ACCOUNT b OF USER L (VIRTUAL CURRENCY B) |
| REMITTANCE AMOUNT | 420 TO 780 POINTS BY VIRTUAL CURRENCY B EXCHANGE |

# FIG. 15

EP 3 680 795 B1

1500

| ACCESS TOKEN | PERMISSION RULE | | |
|---|---|---|---|
| "jgz4uuPnyb" | REMITTANCE SOURCE | REMITTANCE PARTNER | RANGE OF REMITTANCE AMOUNT |
| | ... | ... | ... |
| "DeWKL8XZGB" | REMITTANCE SOURCE | REMITTANCE PARTNER | RANGE OF REMITTANCE AMOUNT |
| | ... | ... | ... |
| ... | ... | ... | ... |
| "P8mOcv+6SW" | REMITTANCE SOURCE | REMITTANCE PARTNER | RANGE OF REMITTANCE AMOUNT |
| | ACCOUNT a OF USER L (VIRTUAL CURRENCY A) | ACCOUNT b OF USER L (VIRTUAL CURRENCY B) | 420 TO 780 POINTS BY VIRTUAL CURRENCY B EXCHANGE |

1501

# FIG. 16

1600

| REMITTANCE SOURCE | ACCOUNT a OF USER L (VIRTUAL CURRENCY A) |
|---|---|
| REMITTANCE PARTNER | ACCOUNT b OF USER L (VIRTUAL CURRENCY B) |
| REMITTANCE AMOUNT | VIRTUAL CURRENCY A 200 POINTS |

# FIG. 17

1700

| REMITTANCE SOURCE | ACCOUNT a OF USER L (VIRTUAL CURRENCY A) |
|---|---|
| REMITTANCE PARTNER | ACCOUNT b OF USER L (VIRTUAL CURRENCY B) |
| REMITTANCE AMOUNT | VIRTUAL CURRENCY A 200 POINTS |
| ACCESS TOKEN | "P8mOcv+6SW" |

# FIG. 18

1800

| REMITTANCE SOURCE | ACCOUNT a OF USER L (VIRTUAL CURRENCY A) |
|---|---|
| REMITTANCE PARTNER | ACCOUNT b OF USER L (VIRTUAL CURRENCY B) |
| RANGE OF REMITTANCE AMOUNT | 420 TO 780 POINTS BY VIRTUAL CURRENCY B EXCHANGE |

# FIG. 19

1900

| TIME | CURRENCY EXCHANGE RATE [VIRTUAL CURRENCY / US DOLLAR] |
|---|---|
| BEFORE SIX DAYS | 12.1 |
| BEFORE FIVE DAYS | 14.1 |
| BEFORE FOUR DAYS | 20.3 |
| BEFORE THREE DAYS | 18.7 |
| BEFORE TWO DAYS | 16.2 |
| BEFORE ONE DAY | 14.1 |
| ON THE DAY | 15.3 |

# FIG. 20

# FIG. 21

EP 3 680 795 B1

S2104

S2101

L

2160

S2103

S2105

S2107

S2102

S2102

2110

2110

150

S2108

2101
(SIGNATURE SERVER
FOR BLOCKCHAIN A)

S2106

S2106

BC
(BLOCKCHAIN A)

BC
(BLOCKCHAIN B)

2101
(SIGNATURE SERVER
FOR BLOCKCHAIN B)

**EP 3 680 795 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018139067 A
- JP 2018521437 A
- JP 2018136657 A